# EUROPEAN PATENT SPECIFICATION

(11) **EP 4 009 094 B1**
(45) Date of publication and mention of the grant of the patent: **29.10.2025**
(21) Application number: 20850021.5
(22) Date of filing: 28.07.2020
(51) Int. Cl.: G02B 15/177, G02B 15/14, G02B 13/00, G02B 5/04

(54) **ZOOM LENS, CAMERA MODULE AND ELECTRONIC DEVICE**
ZOOMOBJEKTIV, KAMERAMODUL UND ELEKTRONISCHES GERÄT
OBJECTIF À FOCALE VARIABLE, MODULE DE CAMÉRA ET DISPOSITIF ÉLECTRONIQUE

(30) Priority: 02.08.2019 CN 201910712262
(43) Date of publication of application: 08.06.2022
(73) Proprietor: GUANGDONG OPPO MOBILE TELECOMMUNICATIONS CORP., LTD., Dongguan, Guangdong 523860 (CN)
(72) Inventor: XU, Qing, Guangdong 523860 (CN)
(74) Representative: Manitz Finsterwald Patent- und Rechtsanwaltspartnerschaft mbB
(86) International application number: PCT/CN2020/105221
(87) International publication number: WO 2021/023066

(56) References cited:
- CN-A- 105 158 871
- CN-A- 105 544 899
- CN-A- 108 916 552
- CN-Y- 201 413 424
- CN-Y- 201 413 424
- JP-A- 2007 212 930
- JP-A- 2008 167 334
- US-A1- 2010 020 409
- US-A1- 2012 327 276

## Description

### TECHNICAL FIELD

The present disclosure relates to the technical field of consumer electronics, in particular to a zoom lens, a camera module, and an electronic device.

### BACKGROUND

In related art, a mobile phone may adopt a periscope camera and make the periscope camera lie flat inside the mobile phone. The periscope camera also commonly has multiple sets of lenses that are arranged in sequence generally along a direction in which the periscope camera lies flat.

US application No. US 2010/020409 A1 discloses a zoom lens including a first lens group having a negative refractive power, a second lens group including a prism which has no refractive power and deflects an optical path, a third lens group that has a positive refractive power and is moved during zooming, a fourth lens group that has a negative refractive power and is moved during zooming, and a fifth lens group having a positive refractive power arranged in this order from an object side. A zoom group including the third positive lens group and the fourth negative lens group, not a fixed positive lens group, is provided on the rear side of the prism. The first lens group includes two negative lenses.

### SUMMARY OF THE DISCLOSURE

The present disclosure provides a zoom lens, a camera module, and an electronic device as set out in the appended set of claims.

In the zoom lens, the camera module, and the electronic device of the present disclosure, the first lens group faces towards the incident surface of the prism, and the third lens group faces towards the exit surface of the prism. The arrangement directions of the first lens group and the third lens group are different, which may avoid the size of the zoom lens in a certain direction being large, such that the arrangement of the internal components of the electronic device is facilitated.

Additional aspects and advantages of embodiments of the present disclosure will be set forth in part in the following description. Some will become obvious by the following description or may be learned by practices of the present disclosure.

### BRIEF DESCRIPTION OF THE DRAWINGS

The above described and / or the additional aspects and advantages of the present disclosure may become obvious and readily understood through the description of the embodiments in conjunction with the following drawings.
FIG. 1 is a schematic plan view of an electronic device according to some embodiments of the present disclosure.
FIG. 2 is a schematic plan view of another view of the electronic device according to some embodiments of the present disclosure.
FIG. 3 is a perspective assembling schematic view of a zoom lens according to some embodiments of the present disclosure.
FIG. 4 is a perspective exploded schematic view of the zoom lens according to some embodiments of the present disclosure.
FIG. 5a is a cross-sectional schematic view of the zoom lens in FIG. 3 along a line V-V under a focal length.
FIG. 5b is a cross-sectional schematic view of the zoom lens in FIG. 3 along the line V-V under another focal length.
FIG. 6 is a cross-sectional schematic view of the zoom lens in FIG. 3 along a line VI-VI.
FIG. 7 is a partial cross-sectional schematic view of the zoom lens in FIG. 3 along a line VII-VII.
FIG. 8 is a schematic plan view of lenses of the zoom lens according to some embodiments of the present disclosure.
FIG. 9 is a partial cross-sectional schematic view of the zoom lens in FIG. 3 along a line IX- IX.
FIG. 10 is a partial cross-sectional view of the zoom lens taken by section lines corresponding to the line V-V in FIG. 3 according to some embodiments.

### DETAILED DESCRIPTION

Embodiments of the present disclosure will be further described in the following combining the accompanying drawings. The same or similar reference numerals in the drawings refer to the same or similar elements or elements with the same or similar functions throughout.

Additionally, the embodiments of the present disclosure described below with reference to the drawings are illustrative, which are only used to illustrate the embodiments of the present disclosure, not intended to be construed as limitations of the present disclosure.

In the present disclosure, a first feature being located "above" or "below" a second feature may include an embodiment in which the first feature is in direct contact with the second feature and an embodiment in which another feature is formed between the first and the second features such that the first feature is not in direct contact with the second feature. Moreover, the first feature being disposed "on", "above", and "upon" the second feature may indicate that the first feature is disposed directly above and obliquely above the second feature, or merely indicate that the first feature is at a higher level than the second feature. The first feature being disposed "below", "under", and "beneath" the second feature may indicate that the first feature is disposed directly below and obliquely below the second feature, or merely indicate that the first feature is at a lower level than the second feature.

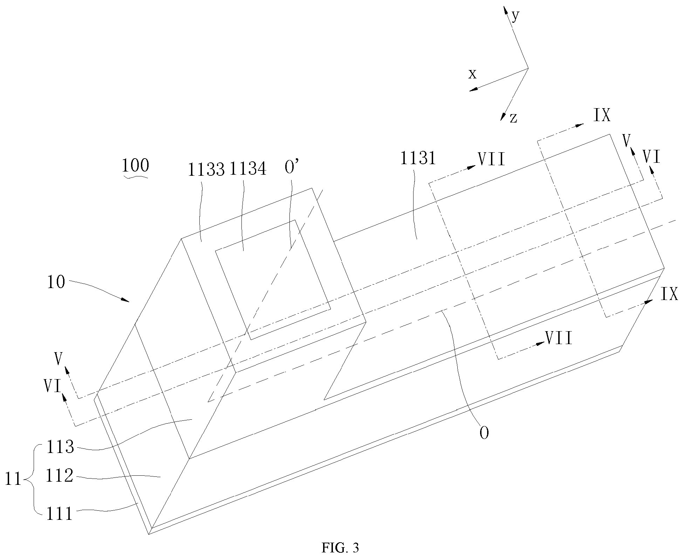

As shown in FIGS. 3-4 and 5a, in some embodiments, a zoom lens 10 includes a first lens group 122, a second lens group 142, a third lens group 162, and a prism 132. The first lens group 122 has a negative optical power. The prism 132 includes an incident surface 136, a reflection surface 137, and an exit surface 138 sequentially connected to each other, and the first lens group 122 faces towards the incident surface 136. The second lens group 142 has a positive optical power and movable with respect to the prism 132. The third lens group 162 has a negative optical power, faces towards the exit surface 138, and is movable with respect to the prism 132.

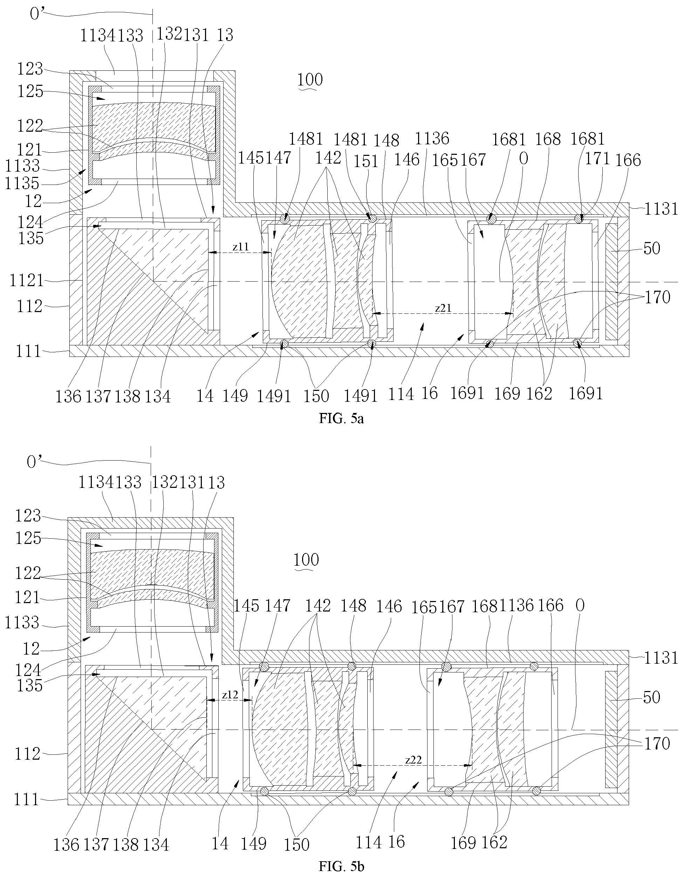

As shown in FIGS. 5a and 5b, in some embodiments, the second lens group 142 may be located between the third lens group 162 and the exit surface 138.

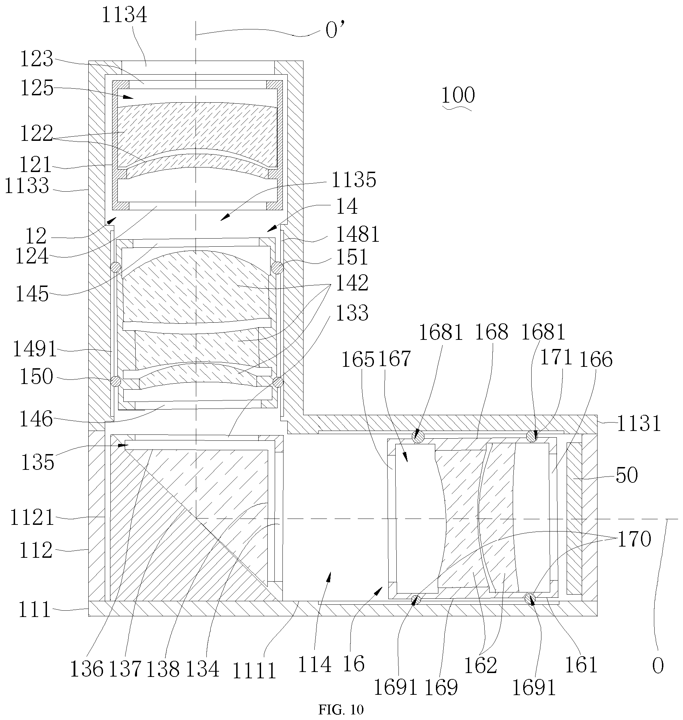

As shown in FIG. 10, in some embodiments, the second lens group 142 may be located between the first lens group 122 and the incident surface 136.

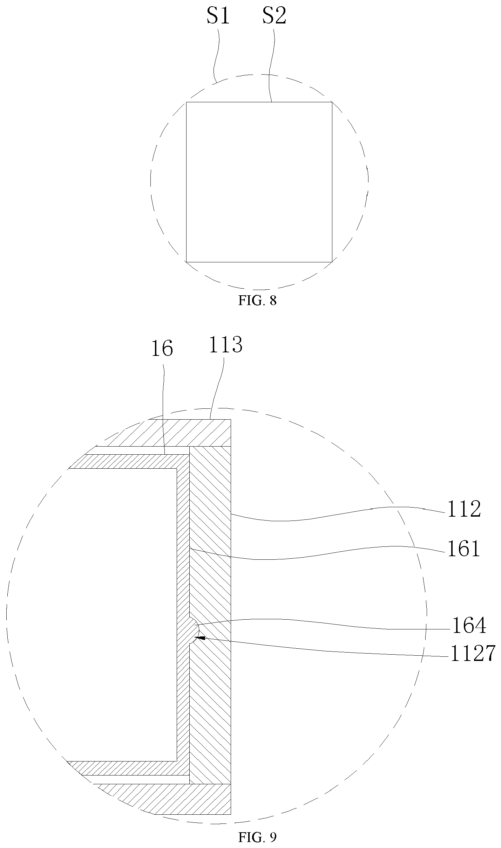

As shown in FIGS. 5a and 8, in some embodiments, each of the first lens group 122, the second lens group 142, and the third lens group 162 includes one or more lenses, and at least one of the lenses is a part of a body of revolution.

In some embodiments, the first lens group 122 has an optical axis O', and the third lens group 162 has an optical axis O. As shown in FIGS. 5a and 5b, in some embodiments, a first spacing z11 on an axis (as shown in FIGS. 5a and 5b, the axis is the optical axis O of the third lens group 162) between the prism 132 and the second lens group 142 when the zoom lens 10 is in a wide-angle state (the state shown in FIG. 5a) is greater than a second spacing z12 on the optical axis O between the prism 132 and the second lens group 142 when the zoom lens 10 is in a telephoto state (the state shown in FIG. 5b), and a third spacing z21 on the optical axis O between the second lens group 142 and the third lens group 162 when the zoom lens 10 is in the wide-angle state is greater than a fourth spacing z22 on the optical axis O between the second lens group 142 and the third lens group 162 when the zoom lens 10 is in the telephoto state.

As shown in FIGS. 3-4 and 5a, in some embodiments, the zoom lens includes a housing 11, a first moving component 14, and a second moving component 16. The housing 11 includes a base plate 111 and a side plate 112 disposed on the base plate 111, and the side plate 112 defines or has a sliding groove 1127. The first moving component 14 includes the second lens group 142 and a first housing 141, and the second lens group 142 is arranged on the first housing 141. The second moving component 16 includes the third lens group 162 and a second housing 161, and the third lens group 162 is arranged on the second housing 161. The first housing 141 includes a first body 143 and a first slider 144 connected to the first body 143. The second housing 161 includes a second body 163 and a second slider 164 connected to the second body 163. The sliding groove 1127 extends along a direction of the optical axis of the second lens group 142 and the third lens group 162. The first slider 144 and the second slider 164 are slidably arranged in the sliding groove 1127, the first housing 141 carries the second lens group 142 to slide when the first housing 141 is sliding, and the second housing 161 carries the third lens group 162 to slide when the second housing 161 is sliding.

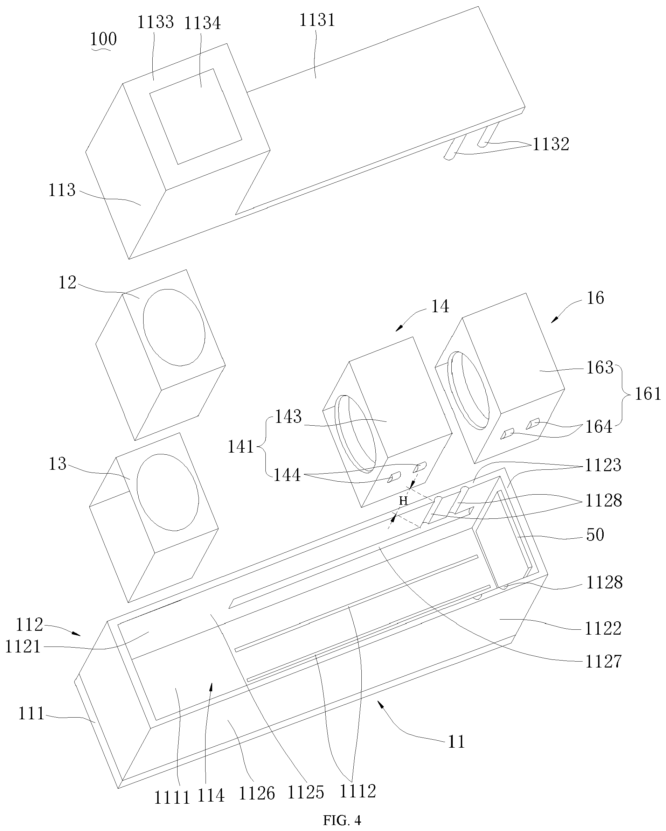

As shown in FIGS. 4 and 5a, in some embodiments, the housing 11 further includes a cover plate 113 disposed on the side plate 112. The first housing 141 further includes a first top surface 148 and a first bottom surface 149 opposite to the first top surface 148. The first top surface 148 faces towards the cover plate 113. The first bottom surface 149 faces towards a bearing surface 1111 of the base plate 111. The first bottom surface 149 defines or has a first groove 1491, a first slide rail 1112 is arranged on a surface (that is, the bearing surface 1111) of the base plate 111 facing towards the first bottom surface 149, the first moving component 14 further includes a first ball 150 disposed in the first groove 1491, and the first ball 150 abuts against a bottom of the first slide rail 1112.

As shown in FIGS. 4 and 5a, in some embodiments, the side plate 112 defines a mounting groove 1128, one end of the mounting groove 1128 extends through a surface of the side plate 112 facing away from the base plate 11, and another end of the mounting groove 1128 is fluidly coupled to the sliding groove 1127. The first slider 144 and the second slider 164 are arranged in the sliding groove 1127 through the mounting groove 1128.

As shown in FIGS. 3-4 and 5a, in some embodiments, the camera module 100 according to a present embodiment includes a photosensitive element 50 and a zoom lens 10, and the photosensitive element 50 is arranged on an image side of the zoom lens 10. The zoom lens 10 includes a first lens group 122, a second lens group 142, a third lens group 162, and a prism 132. The first lens group 122 has a negative optical power. The prism 132 includes an incident surface 136, a reflection surface 137, and an exit surface 138 sequentially connected to each other, and the first lens group 122 faces towards the incident surface 136. The second lens group 142 has a positive optical power and movable with respect to the prism 132. The third lens group 162 has a negative optical power, faces towards the exit surface 138, and is movable with respect to the prism 132.

As shown in FIGS. 5a and 5b, in some embodiments, the second lens group 142 may be located between the third lens group 162 and the exit surface 138.

As shown in FIG. 10, in some embodiments, the second lens group 142 may be located between the first lens group 122 and the incident surface 136.

As shown in FIGS. 5a and 8, in some embodiments, each of the first lens group 122, the second lens group 142, and the third lens group 162 includes one or more lenses, and at least one of the lenses is a part of a body of revolution.

As shown in FIGS. 5a and 5b, in some embodiments, a first spacing z11 on the axis (as shown in FIGS. 5a and 5b, the axis is the optical axis O of the third lens group 162) between the prism 132 and the second lens group 142 when the zoom lens 10 is in a wide-angle state (the state shown in FIG. 5a) is greater than a second spacing z12 on the optical axis O between the prism 132 and the second lens group 142 when the zoom lens 10 is in a telephoto state (the state shown in FIG. 5b). Besides, a third spacing z21 on the optical axis O between the second lens group 142 and the third lens group 162 when the zoom lens 10 is in the wide-angle state is greater thana fourth spacing z22 on the optical axis O between the second lens group 142 and the third lens group 162 when the zoom lens 10 is in the telephoto state.

As shown in FIGS. 3-4 and 5a, in some embodiments, the zoom lens includes a housing 11, a first moving component 14, and a second moving component 16. The housing 11 includes a base plate 111 and a side plate 112 disposed on the base plate 111, and the side plate 112 defines or has a sliding groove 1127. The first moving component 14 includes the second lens group 142 and a first housing 141, and the second lens group 142 is arranged on the first housing 141. The second moving component 16 includes the third lens group 162 and a second housing 161, and the third lens group 162 is arranged on the second housing 161. The first housing 141 includes a first body 143 and a first slider 144 connected to the first body 143. The second housing 161 includes a second body 163 and a second slider 164 connected to the second body 163. The sliding groove 1127 extends along a direction of the optical axis of the second lens group 142 and the third lens group 162. The first slider 144 and the second slider 164 are slidably arranged in the sliding groove 1127, the first housing 141 carries the second lens group 142 to slide when the first housing 141 is sliding, and the second housing 161 carries the third lens group 162 to slide when the second housing 161 is sliding.

As shown in FIGS. 4 and 5a, in some embodiments, the housing 11 further includes a cover plate 113 disposed on the side plate 112. The first housing 141 further includes a first top surface 148 and a first bottom surface 149 opposite to the first top surface 148. The first top surface 148 faces towards the cover plate 113. The first bottom surface 149 faces towards a bearing surface 1111 of the base plate 111. The first bottom surface 149 defines or has a first groove 1491, a first slide rail 1112 is arranged on a surface (that is, the bearing surface 1111) of the base plate 111 facing towards the first bottom surface 149, the first moving component 14 further includes a first ball 150 disposed in the first groove 1491, and the first ball 150 abuts against the bottom of the first slide rail 1112.

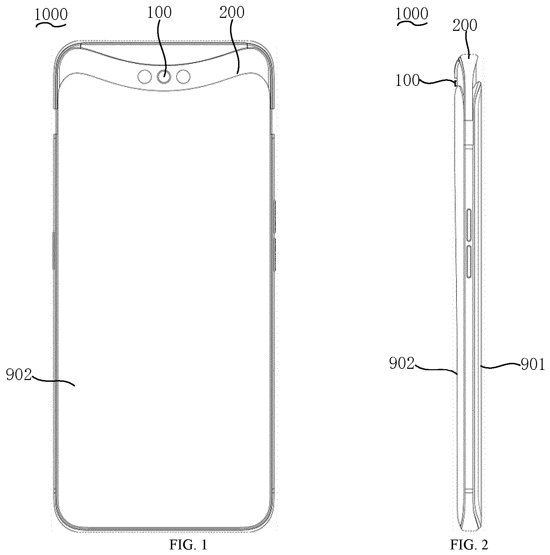

As shown in FIGS. 4 and 5a, in some embodiments, the side plate 112 defines a mounting groove 1128, one end of the mounting groove 1128 extends through a surface of the side plate 112 facing away from the base plate 111, and another end of the mounting groove 1128 is fluidly coupled to the sliding groove 1127. The first slider 144 and the second slider 164 are arranged in the sliding groove 1127 through the mounting groove 1128.As shown in FIGS. 1-2, in some embodiments, the electronic device 1000 may include a casing 200 and the camera module 100 as described in any embodiment above. The camera module 100 is disposed on the casing 200.

As shown in FIGS. 1-3, in some embodiments, a direction of an optical axis O' of the first lens group 122 is substantially coincident with and parallel to a thickness direction of the electronic device 1000. A direction of an optical axis O of the third lens group 162 is substantially perpendicular to the thickness direction of the electronic device 1000.

As shown in FIGS. 1 and 2, the electronic device 1000 includes a casing 200 and a camera module 100. The camera module 100 is assembled with the casing 200. Specifically, the electronic device 1000 may be a mobile phone, a tablet computer, a display, a laptop computer, a teller machine, a gate, a smart watch, a head display device, a gaming machine, or the like. Embodiments of the present disclosure are illustrated with taking the electronic device 1000 being a mobile phone as an example, and it is understood that the specific form of the electronic device 1000 is not limited to the mobile phone.

The casing 200 may be used to mount the camera module 100, or in other words, the casing 200 may serve as a mounting carrier of the camera module 100. The electronic device 1000 includes a front surface 901 and a rear surface 902. The camera module 100 may be disposed on the front surface 901 as a front camera, and the camera module 100 may be also disposed on the rear surface 902 as a rear camera. In some embodiments of the present disclosure, the camera module 100 is disposed on the rear surface 902 as a rear camera. The casing 200 may also be used to mount functional modules of the electronic device 1000, such as the camera module 100, a power supply device, a communication device, etc., such that the casing 200 may provide protections such as dustproof, anti-drop, waterproof and so on for the functional modules.

As shown in FIGS. 3-4, 5a and 5b, the camera module 100 includes a zoom lens 10 and a photosensitive element 50 arranged on an image side of the zoom lens 10. The photosensitive element 50 may adopt a Complementary Metal Oxide semiconductor (CMOS) photosensitive element, or a Charge-coupled Device (CCD) photosensitive element.

As shown in FIGS. 3-4, 5a and 5b, the zoom lens 10 includes a first lens group 122, a second lens group 142, a third lens group 162, and a prism 132. The first lens group 122 has a negative optical power. The prism 132 includes an incident surface 136, a reflection surface 137, and an exit surface 138 sequentially connected to each other, and the first lens group 122 faces towards the incident surface 136. The second lens group 142 has a positive optical power and movable with respect to the prism 132. The third lens group 162 has a negative optical power, faces towards the exit surface 138, and is further movable with respect to the prism 132.

The first lens group 122 faces towards the incident surface 136 of the prism 132, the third lens group 162 faces towards the exit surface 138 of the prism 132, and the second lens group 142 and the third lens group 162 are movable with respect to the prism 132, such that a focal length of the zoom lens 10 can vary. In this way, the zoom lens 10 not only has a periscope structure as a whole, but can also achieve an optical zoom.

However, in the direction in which multiple sets of lenses are arranged sequentially, the size of the current periscope camera is large, which makes the rest of the elements inside the mobile phone difficult to be arranged.

In the zoom lens 10 of the present disclosure, the first lens group 122 faces towards the incident surface 136 of the prism 132, and the third lens group 162 faces towards the exit surface 138 of the prism 132. The arrangement directions of the first lens group 122 and the third lens group 162 are different, which may avoid the size of the zoom lens 10 in a certain direction being large, such that the arrangement of the internal components of the electronic device 1000 is facilitated.

As shown in FIG. 3, for convenience of the following description, the first lens group 122 has the optical axis O', the second lens group 142 and the third lens group 162 have the optical axis O. A direction substantially parallel to the optical axis O is defined as an x-direction (the direction of the optical axis O of the second lens group 142 substantially coincides with the direction of the optical axis O of the third lens group 162), a direction substantially parallel to the optical axis O' is defined as a z-direction, and a direction substantially perpendicular to a plane in which the optical axis O and the optical axis O' are located is defined as a y-direction. Each two of the x-direction, the y-direction and the z-direction are perpendicular to each other.

As shown in FIGS. 3-4, 5a and 5b, the zoom lens 10 includes a housing 11, a lens component 12, a prism component 13, a first moving component 14, and a second moving component 16. The housing 11, the lens component 12, the prism component 13, the first moving component 14, and the second moving component 16 are all arranged in the housing 11, and both the first moving component 14 and the second moving component 16 are movable relative to the prism component 13.

The housing 11 includes a base plate 111, a side plate 112, and a cover plate 113. The base plate 111, the side plate 112, and the cover plate 113 enclose a receiving space 114. The lens component 12, the prism component 13, the first moving component 14, and the second moving component 16 are all arranged in the receiving space 114.

The base plate 111 includes a bearing surface 1111. The bearing surface 1111 is configured to carry the side plate 112 and the zoom lens 10. The base plate 111 may be substantially a cuboid structure, a cube structure, a cylindrical structure, or structures of other shapes, and the like, which is not limited herein. In the present embodiment, the base plate 111 has a cuboid structure.

The side plate 112 is disposed around an edge of the base plate 111. The side plate 112 is substantially perpendicular to the bearing surface 1111 of the base plate 111. The side plate 112 may be disposed on the base plate 111 by means of gluing, screwing, snapping, or the like. The side plates 112 may also be integrally formed with the base plate 111.

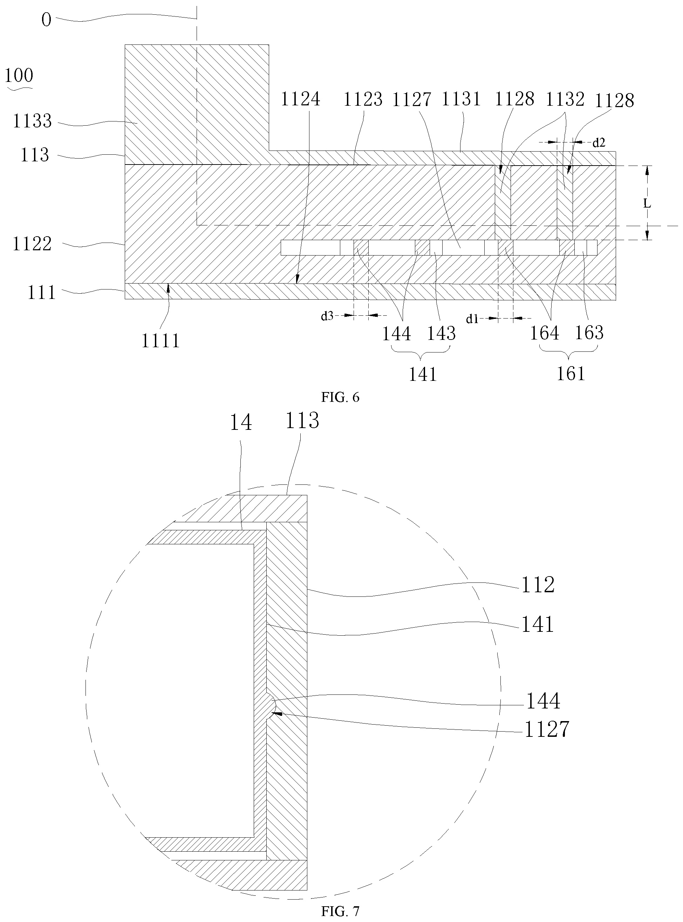

As shown in FIG. 6, the side plate 112 includes an inner side surface 1121, an outer side surface 1122, an upper surface 1123, and a lower surface 1124. The inner side surface 1121 is opposite to the outer side surface 1122, and the inner side surface 1121 is located in the receiving space 114. The outer side surface 1122 is located outside the receiving space 114. The inner side surface 1121 is connected to both the upper surface 1123 and the lower surface 1124, and the outer side surface 1122 is also connected to both the upper surface 1123 and the lower surface 1124. The upper surface 1123 is opposite to the lower surface 1124. The lower surface 1124 is disposed on or further contacts with the bearing surface 1111 of the base plate 111, and the upper surface 1123 faces away from the bearing surface 1111 of the base plate 111.

As shown in FIGS. 4 and 6, the side plate 112 further includes a first side plate 1125 and a second side plate 1126 substantially parallel to the x-direction. The first side plate 1125 faces towards the second side plate 1126. The inner side surface 1121 of the first side plate 1125 and / or the inner side surface 1121 of the second side plate 1126 define/ defines a sliding groove 1127 and a mounting groove 1128. For example, the inner side surface 1121 of the first side plate 1125 defines a sliding groove 1127 and a mounting groove 1128, or the inner side surface 1121 of the second side plate 1126 defines a sliding groove 1127 and a mounting groove 1128, or both the inner side surface 1121 of the first side plate 1125 and the inner side surface 1121 of the second side panel 1126 define a sliding groove 1127 and a mounting groove 1128. In the present embodiment, both the inner side surface 1121 of the first side plate 1125 and the inner side surface 1121 of the second side panel 1126 define a sliding groove 1127 and a mounting groove 1128. An extending direction of the sliding groove 1127 is substantially parallel to the bearing surface 1111.

The sliding groove 1127 is fluidly coupled to the receiving space 114, and the extending direction of the sliding groove 1127 is also substantially parallel to the x-direction. A depth of the sliding groove 1127 is less than a thickness of the side plate 112, that is, the sliding groove 1127 does not penetrate through the outer side surface 1122 of the side plate 112. In other embodiments, the sliding groove 1127 may penetrate through the outer side surface 1122 of the side plate 112 to allow the receiving space 114 to be fluidly coupled to the outside. The number of the sliding grooves 1127 defined in the inner side surface 1121 of the first side plate 1125 and the inner side surface 1121 of the second side plate 1126 may be one or more. For example, the inner side surface 1121 of the first side plate 1125 defines one sliding groove 1127, and the inner side surface 1121 of the second side plate 1126 defines one sliding groove 1127; for another example, the inner side surface 1121 of the first side plate 1125 defines two sliding grooves 1127, and the inner side surface 1121 of the second side plate 1126 defines two sliding grooves 1127; for a further example, the inner side surface 1121 of the first side plate 1125 defines one sliding groove 1127, and the inner side surface 1121 of the second side plate 1126 defines two sliding grooves 1127, and so on, which will not be listed one by one herein. In the present embodiment, both the inner side surface 1121 of the first side plate 1125 and the inner side surface 1121 of the second side plate 1126 define a sliding groove 1127. The cross-sectional shape of the sliding groove 1127 taken by a plane substantially perpendicular to the x-direction may be rectangular, semi-circular, or other shape, such as other regular shapes or irregular shapes. As shown in FIG. 7, in the present embodiment, the cross-sectional shape of the sliding groove 1127 taken by the plane substantially perpendicular to the x-direction is an irregular shaped shape that is enclosed by a straight line and an arc to form a closed "D" shape, and the cross-sectional shape of an inner wall of the sliding groove 1127 corresponds to the arc of the "D" shape.

The mounting groove 1128 is fluidly coupled to the receiving space 114, one end of the mounting groove 1128 penetrate through the upper surface 1123 of the side plate 112, and the other end of the mounting groove 1128 is fluidly coupled to the sliding groove 1127. An extending direction of the mounting groove 1128 may be substantially perpendicular or oblique to the extending direction of the sliding groove 1127, for example, the extending direction of the mounting groove 1128 may be substantially perpendicular to the x-direction, or the extending direction of the mounting groove 1128 may be substantially at a certain inclination angle (not 0 degree, may be 30 degrees, 60 degrees, 75 degrees, etc.) to the x-direction. In the present embodiment, the extending direction of the mounting groove 1128 is substantially perpendicular to the x-direction. The number of the mounting grooves 1128 defined in the inner side surface 1121 of the first side plate 1125 and the inner side surface 1121 of the second side plate 1126 may be one or more. For example, the inner side surface 1121 of the first side plate 1125 defines one mounting groove 1128, and the inner side surface 1121 of the second side plate 1126 defines one mounting groove 1128; for another example, the inner side surface 1121 of the first side plate 1125 defines two mounting grooves 1128, and the inner side surface 1121 of the second side plate 1126 defines two mounting grooves 1128; for a further example, the inner side surface 1121 of the first side plate 1125 defines one mounting groove 1128, and the inner side surface 1121 of the second side plate 1126 defines two mounting grooves 1128, and so on, which will not be listed one by one herein. In the present embodiment, both the inner side surface 1121 of the first side plate 1125 and the inner side surface 1121 of the second side plate 1126 define two mounting grooves 1128.

As shown in FIGS. 4 to 6, the cover plate 113 is disposed on the side plate 112. In some embodiments, the cover plate 113 may be mounted on the upper surface 1123 of the side plate 112 by means of snapping, screwing, gluing or the like. The cover plate 113 includes a cover body 1131, a resisting component 1132, and a protrusion 1133.

The cover body 1131 is disposed on or further contacts with the upper surface 1123 of the side plate 112. The cover body 1131 is connected to the protrusion 1133, and the protrusion 1133 is located at one end of the side plate 112 and facing towards the prism component 13. The protrusion 1133 is disposed on the upper surface 1123 of the side plate 112. A surface of the protrusion 1133 facing away from the side plate 112 defines a light entrance 1134, and a depth direction of the light entrance 1134 may be substantially perpendicular to the x-direction, such that the camera module 100 has a periscope structure as a whole. The protrusion 1133 defines a mounting space 1135 fluidly coupled to the receiving space 114, and the lens component 12 is arranged in the mounting space 1135. The cover body 1131 is arranged on the upper surface 1123 of the side plate 112 and facing towards the first moving component 14 and the second moving component 16.

The resisting component 1132 is disposed on both sides of the cover body 1131, specifically, the resisting component 1132 is located on a side of the cover body 1131 corresponding to the first side plate 1125 and a side of the cover body 1131 corresponding to the second side plate 1126. When the cover plate 113 is mounted on the side plate 112, the resisting component 1132 is located in the mounting groove 1128, and the length L of the resisting component 1132 in the z-direction is substantially equal to the depth H of the mounting groove 1128 in the z-direction. The resisting component 1132 being located in the mounting groove 1128 may be that the resisting component 1132 is located in the mounting groove 1128 and occupies a part of the space of the mounting groove 1128. The resisting component 1132 being located in the mounting groove 1128 may also be that the resisting component 1132 is located in and completely fills the mounting groove 1128. In the present embodiment, when the resisting component 1132 is arranged in the mounting groove 1128, the resisting component 1132 completely fills the mounting groove 1128, such that the resisting component 1132 may be more firmly connected to the mounting groove 1128 make the connection of the cover plate 113 and the side plate 112 stronger. In other embodiments, the light entrance 1134 is not a through hole, but a transparent solid structure from which a light may be incident into the mounting space 1135 and enter the lens component 12.

As shown in FIGS. 4, 5a and 5b, the lens component 12 includes a fixing housing 121 and the first lens group 122. The first lens group 122 is disposed in the fixing housing 121.

The fixing housing 121 is disposed in the mounting space 1135 defined in the protrusion 1133 of the cover plate 113. More specifically, the fixing housing 121 may be arranged in the mounting space 1135 by means of gluing, screwing, snapping, or the like. The fixing housing 121 may also be integrally formed with the protrusion 1133. The fixing housing 121 defines a light inlet hole 123, a light outlet hole 124, and a receiving cavity 125. The receiving cavity 125 is fluidly coupled to the mounting space 1135 via the light inlet hole 123 and the light outlet hole 124. The light inlet hole 123 faces towards the light entrance 1134 of the protrusion 1133, and the light outlet hole 124 faces towards the prism component 13.

The first lens group 122 is disposed in the receiving cavity 125, and the first lens group 122 may be arranged in the fixing housing 121 by means of gluing, screwing, snapping, or the like. The first lens group 122 may be a single lens that is a convex lens or a concave lens; or the first lens group 122 may include multiple lenses (for example, two, three, etc.), the multiple lenses may all be convex lenses or concave lenses, or partially convex lenses and partially concave lenses. In the present embodiment, the first lens group 122 includes two lenses. The lenses of the first lens group 122 may be glass lenses or plastic lenses.

The lenses of the first lens group 122 are part of the body of revolution. For example, as shown in FIG. 8, the lenses of the first lens group 122 are firstly formed into a revolution lens S1 by a mold. Then edges of the revolution lens S1 are cut, and a cutting ratio is determined based on factors such as a size of the internal space of the electronic device 1000, optical parameters of the zoom lens 10, and so on, so as to form a lens S2 that is approximately cube or cuboid as shown in FIG. 8 (a surface of the cube or cuboid lens S2 through which the optical axis O' passes is recessed or protruded). In some embodiments, the lenses of the first lens group 122 are directly made by using a specially fabricated mold, that is, a cavity of the mold is a part of the body of revolution such that the lenses of the first lens group 122 are directly made. As a result, the volume of the lenses of the first lens group 122 is greatly reduced, such that the entire volume of the zoom lens 10 may be reduced, which may be beneficial to the miniaturization of the electronic device 1000.

As shown in FIGS. 4, 5a and 5b, the prism component 13 is disposed on the bearing surface 1111 of the base plate 111 and located in the receiving space 114. The prism component 13 includes a mounting station 131 and a prism 132.

The mounting station 131 is disposed on the bearing surface 1111 of the base plate 111. More specifically, the mounting station 131 may be arranged on the bearing surface 1111 by gluing, screwing, snapping, or the like. The mounting station 131 may also be integrally formed with the base plate 111. The mounting station 131 includes a light inlet via 133, a light outlet via 134, and an accommodating cavity 135. The accommodating cavity 135 is fluidly coupled to the receiving space 114 through the light inlet via 133 and the light outlet via 134. The light entrance via 133 faces towards the light outlet hole 124 of the lens component 12, and the light outlet via 134 faces towards the first moving component 14.

A prism 132 is disposed in the accommodating cavity 135, and the prism 132 may be arranged on the mounting station 131 by means of gluing, snapping, or the like. The prism 132 includes an incident surface 136, a reflection surface 137, and an exit surface 138, the reflection surface 137 is obliquely connected to the incident surface 136 and the exit surface 138, and an angle between the reflection surface 137 and the bearing surface 1111 may be approximately 15 degrees, approximately 30 degrees, approximately 45 degrees, approximately 60 degrees, approximately 75 degrees, and the like. In the present embodiment, the angle between the reflection surface 137 and the bearing surface 1111 is approximately 45 degrees. The incident surface 136 faces towards the light inlet via 133, and the exit surface 138 faces towards the light outlet via 134. The prism 132 is configured to change an emission direction of light entering from the light inlet via 133. The prism 132 may be a triangular prism. In some embodiments, the cross-section of the prism 132 may be in shape of a right triangle, one right side of the right triangle is the incident surface 136, the other right side of the right triangle is the exit surface 138, and a hypotenuse of the right triangle is the reflection surface 137.

As shown in FIGS. 4-6, the first moving component 14 includes the first housing 141 and the second lens group 142. The second lens group 142 is arranged on the first housing 141. The first housing 141 carries the second lens group 142 to slide when sliding.

The first housing 141 includes a first body 143 and a first slider 144. The first slider 144 is fixedly connected to the first body 143.

The first body 143 defines a first light entrance 145 and a first light exit 146 corresponding to the second lens group 142. The first body 143 defines a first accommodating space 147 to accommodate the second lens group 142, and the first accommodating space 147 is fluidly coupled to the receiving space 114 through the first light entrance 145 and the first light exit 146. The first light entrance 145 faces towards the light outlet via 134 of the prism component 13, and the first light exit 146 faces towards the second moving component 16.

The first slider 144 is located on a surface of the first body 143 facing towards the inner side surface 1121 of the first side plate 1125 and / or the second side plate 1126. For example, the first slider 144 is located on the surface of the first body 143 facing towards the inner side surface 1121 of the first side plate 1125; or, the first slider 144 is located on the surface of the first body 143 facing towards the inner side surface 1121 of the second side plate 1126; or, the first slider 144 is located on a surface of the first body 143 facing towards the inner side surfaces 1121 of the first side plate 1125 and the second side plate 1126. In the present embodiment, the first slider 144 is located on the surface of the first body 143 facing towards the inner side surfaces 1121 of the first side plate 1125 and the second side plate 1126. The first slider 144 passes through the mounting groove 1128 and slides into the sliding groove 1127 such that the first slider 144 may be slidably disposed in the sliding groove 1127.

The number of the first sliders 144 matches the number of corresponding mounting grooves 1128, which indicates or means that the number of the first sliders 144 on the surface of the first body 143 facing towards the inner surface 1121 of the first side plate 1125 is the same with the number of the mounting grooves 1128 defined in the inner surface 1121 of the first side plate 1125, and is two; the number of the first sliders 144 on the surface of the first body 143 facing towards the inner surface 1121 of the second side plate 1126 is the same with the number of the mounting grooves 1128 defined in the inner surface 1121 of the second side plate 1126, and is two; the two first sliders 144 correspond to the two mounting grooves 1128 one to one. It should be understood, in other embodiments, the number of the first sliders 144 may be less than the number of the mounting grooves 1128, for example, the number of the first sliders 144 on the surface of the first body 143 facing towards the inner surface 1121 of the first side plate 1125 is less than the number of the mounting grooves 1128 defined in the inner surface 1121 of the first side plate 1125, and the number of the first sliders 144 on the surface of the first body 143 facing towards the inner surface 1121 of the second side plate 1126 is less than the number of the mounting grooves 1128 defined in the inner surface 1121 of the second side plate 1126. Moreover, a length d1 of the first slider 144 in the x-direction is less than or substantially equal to a length d2 of the mounting groove 1128 in the x-direction, so as to facilitate the first slider 144 sliding into the sliding groove 1127 after passing through the mounting groove 1128.

A cross-sectional shape of the first slider 144 taken by a plane substantially perpendicular to the x-direction may be rectangular, semi-circular, or other shape, such as other regular shapes or irregular shapes, as long as the condition that the shape of the first slider 144 matches the shape of the corresponding sliding groove 1127 is satisfied. Specifically, the shape of the first slider 144 matching the shape of the corresponding sliding groove 1127 indicates or means that: when the cross-section of the slide groove 1127 defined in the inner side surface 1121 of the first side plate 1125, taken by a plane substantially perpendicular to the x-direction, is rectangular, the cross-section of the first slider 144 on the surface of the first body 143 facing towards the inner side surface 1121 of the first side plate 1125, taken by a plane substantially perpendicular to the x-direction, is also rectangular; when the cross-section of the slide groove 1127 defined in the inner side surface 1121 of the second side plate 1126, taken by the plane substantially perpendicular to the x-direction, is rectangular, the cross-section of the first slider 144 on the surface of the first body 143 facing towards the inner side surface 1121 of the second side plate 1126, taken by the plane substantially perpendicular to the x-direction. is also rectangular; when the cross-section of the slide groove 1127 defined in the inner side surface 1121 of the first side plate 1125, taken by a plane substantially perpendicular to the x-direction, is semi-circular, the cross-section of the first slider 144 on the surface of the first body 143 facing towards the inner side surface 1121 of the first side plate 1125, taken by a plane substantially perpendicular to the x-direction, is also semi-circular; when the cross-section of the slide groove 1127 defined in the inner side surface 1121 of the second side plate 1126, taken by the plane substantially perpendicular to the x-direction, is semi-circular, the cross-section of the first slider 144 on the surface of the first body 143 facing towards the inner side surface 1121 of the second side plate 1126, taken by the plane substantially perpendicular to the x-direction, is also semi-circular; and the like, which will not be listed one by one.

As shown in FIG. 7, in the present embodiment, the cross-sectional shape of the first slider 144 taken by the plane substantially perpendicular to the x-direction is an irregular shape that is enclosed by a straight line and an arc to form a closed "D" shape, and the cross-sectional shape of an outer wall of the first slider 144 corresponds to the arc of the "D" shape. The shape of the first slider 144 matching the shape of the corresponding sliding groove 1127 indicates or means that a curvature of the arc corresponding to the inner wall of the sliding groove 1127 is the same with a curvature of the arc corresponding to the outer wall of the first slider 144. In this way, the first slider 144 and the sliding groove 1127 may be better cooperated to each other.

In the z-direction, two opposite ends of the first slider 144 abut against two opposite ends of the inner wall of the sliding groove 1127. Specifically, when the first slider 144 is arranged in the sliding groove 1127, in the z-direction, the two opposite ends of the first slider 144 corresponding to the first side plate 1125 abut against the two opposite ends of the inner wall of the sliding groove 1127 on the inner side surface 1121 of the first side plate 1125, and the opposite ends of the first slider 144 corresponding to the second side plate 1126 abut against the opposite ends of the inner wall of the sliding groove 1127 on the inner side surface 1121 of the second side plate 1126. In this way, the movement of the first slider 144 in the z-direction is restricted to reduce the possibility of the shaking or tilting of the first slider 144 along the z-direction, which may ensure that the imaging quality of the zoom lens 10 is not affected.

The second lens group 142 is disposed in the first accommodating space 147. Specifically, the second lens group 142 may be arranged in the first accommodating space 147 by means of gluing, screwing, snapping, or the like. The second lens group 142 may be a single lens that is a convex lens or a concave lens; or the second lens group 142 may include multiple lenses (for example, two, three, etc.), the multiple lenses may all be convex lenses or concave lenses, or partially convex lenses and partially concave lenses. In the present embodiment, the second lens group 142 includes three lenses. The lenses of the second lens group 142 may be glass lenses or plastic lenses.

As shown in FIG. 8 again, the lenses of the second lens group 142 are part of the body of revolution. For example, the lenses of the second lens group 142 are firstly formed into the revolution lens S1 by a mold. Then edges of the revolution lens S1 are cut, and a cutting ratio is determined based on factors such as the size of the internal space of the electronic device 1000, the optical parameters of the zoom lens 10, and so on, so as to form the lens S2 that is approximately cube or cuboid as shown in FIG. 8 (the surface of the cube or cuboid lens S2 through which the optical axis O' passes is recessed or protruded). In some embodiments, the lenses of the second lens group 142 are directly made by using a specially fabricated mold, that is, a cavity of the mold is a part of the body of revolution such that the lenses of the second lens group 142 are directly made. As a result, the volume of the lenses of the second lens group 142 is greatly reduced, such that the entire volume of the zoom lens 10 is reduced, which is beneficial to the miniaturization of the electronic device 1000.

As shown in FIGS. 4-6, the second moving component 16 includes the second housing 161 and the third lens group 162. The third lens group 162 is arranged on the second housing 161. The second housing 161 carries the third lens group 162 to slide when sliding.

The second housing 161 includes a second body 163 and a second slider 164. The second slider 164 is fixedly connected to the second body 163.

The second body 163 defines a second light entrance 165 and a second light exit 166 corresponding to the third lens group 162. The second body 163 defines a second accommodating space 167 to accommodate the third lens group 162, and the second accommodating space 167 is fluidly coupled to the receiving space 114 through the second light entrance 165 and the second light exit 166. The second light entrance 165 faces towards the first light exit 146 of the first moving component 14, and the second light exit 166 faces towards the photosensitive element 50.

The second slider 164 is located on a surface of the second body 163 facing towards the inner side surface 1121 of the first side plate 1125 and / or the second side plate 1126. For example, the second slider 164 is located on the surface of the second body 163 facing towards the inner side surface 1121 of the first side plate 1125; or, the second slider 164 is located on the surface of the second body 163 facing towards the inner side surface 1121 of the second side plate 1126; or, the second slider 164 is located on a surface of the second body 163 facing towards the inner side surfaces 1121 of the first side plate 1125 and the second side plate 1126. In the present embodiment, the second slider 164 is located on the surface of the second body 163 facing towards the inner side surfaces 1121 of the first side plate 1125 and the second side plate 1126. The second slider 164 passes through the mounting groove 1128 and slides into the sliding groove 1127 such that the second slider 164 may be slidably disposed in the sliding groove 1127.

The number of the second sliders 164 matches the number of corresponding mounting grooves 1128, which indicates or means that the number of second sliders 164 on the surface of the second body 163 facing towards the inner surface 1121 of the first side plate 1125 is the same with the number of the mounting grooves 1128 defined in the inner surface 1121 of the first side plate 1125, and is two; the number of second sliders 164 on the surface of the second body 163 facing towards the inner surface 1121 of the second side plate 1126 is the same with the number of the mounting grooves 1128 defined in the inner surface 1121 of the second side plate 1126, and is two; the two second sliders 164 correspond to the two mounting grooves 1128 one to one. It should be understood, in other embodiments, the number of second sliders 164 may be less than the number of the mounting groove 1128, for example, the number of the second sliders 164 on the surface of the second body 163 facing towards the inner surface 1121 of the first side plate 1125 is less than the number of the mounting grooves 1128 defined in the inner surface 1121 of the first side plate 1125, and the number of the second sliders 164 on the surface of the second body 163 facing towards the inner surface 1121 of the second side plate 1126 is less than the number of the mounting grooves 1128 defined in the inner surface 1121 of the second side plate 1126. Moreover, a length d3 of the second slider 164 in the x-direction is less than or substantially equal to the length d2 of the mounting groove 1128 in the x-direction, so as to facilitate the second slider 164 sliding into the sliding groove 1127 after passing through the mounting groove 1128.

A cross-sectional shape of the second slider 164 taken by a plane substantially perpendicular to the x-direction may be rectangular, semi-circular, or other shape, such as other regular shapes or irregular shapes, as long as the condition that the shape of the second slider 164 matches the shape of the corresponding sliding groove 1127 is satisfied. Specifically, the shape of the second slider 164 matching the shape of the corresponding sliding groove 1127 indicates or means that: when the cross-section of the slide groove 1127 defined in the inner side surface 1121 of the first side plate 1125, taken by a plane substantially perpendicular to the x-direction, is rectangular, the cross-section of the second slider 164 on the surface of the second body 163 facing towards the inner side surface 1121 of the first side plate 1125, taken by a plane substantially perpendicular to the x-direction, is also rectangular; when the cross-section of the slide groove 1127 defined in the inner side surface 1121 of the second side plate 1126, taken by the plane substantially perpendicular to the x-direction, is rectangular, the cross-section of the second slider 164 on the surface of the second body 163 facing towards the inner side surface 1121 of the second side plate 1126, taken by the plane substantially perpendicular to the x-direction, is also rectangular; when the cross-section of the slide groove 1127 defined in the inner side surface 1121 of the first side plate 1125, taken by a plane substantially perpendicular to the x-direction, is semi-circular, the cross-section of the second slider 164 on the surface of the second body 163 facing towards the inner side surface 1121 of the first side plate 1125, taken by a plane substantially perpendicular to the x-direction, is also semi-circular; when the cross-section of the slide groove 1127 defined in the inner side surface 1121 of the second side plate 1126, taken by the plane substantially perpendicular to the x-direction, is semi-circular, the cross-section of the second slider 164 on the surface of the second body 163 facing towards the inner side surface 1121 of the second side plate 1126, taken by the plane substantially perpendicular to the x-direction, is also semi-circular; and the like, which will not be listed one by one.

As shown in FIG. 9, in the present embodiment, the cross-sectional shape of the second slider 164 taken by the plane substantially perpendicular to the x-direction is an irregular shape that is enclosed by a straight line and an arc to form a closed "D" shape, and the taken shape of an outer wall of the second slider 164 corresponds to the arc of the "D" shape. The shape of the second slider 164 matching the shape of the corresponding sliding groove 1127 indicates or means that the curvature of the arc corresponding to the inner wall of the sliding groove 1127 is the same with a curvature of the arc corresponding to the outer wall of the second slider 164. In this way, the second slider 164 and the sliding groove 1127 may be better cooperated to each other.

In the z-direction, two opposite ends of the second slider 164 abut against two opposite ends of the inner wall of the sliding groove 1127. Specifically, when the second slider 164 is arranged in the sliding groove 1127, in the z-direction, the two opposite ends of the second slider 164 corresponding to the first side plate 1125 abut against the two opposite ends of the inner wall of the sliding groove 1127 on the inner side surface 1121 of the first side plate 1125, and the opposite ends of the second slider 164 corresponding to the second side plate 1126 abut against the opposite ends of the inner wall of the sliding groove 1127 on the inner side surface 1121 of the second side plate 1126. In this way, the movement of the second slider 164 in the z-direction is restricted to reduce the possibility of the shaken or tilt of the second slider 164 along the z-direction, which may ensure that the imaging quality of the zoom lens 10 is not affected.

The third lens group 162 is disposed in the second accommodating space 167. Specifically, the third lens group 162 may be arranged in the second accommodating space 167 by means of gluing, screwing, snapping, or the like. The third lens group 162 may be a single lens that is a convex lens or a concave lens; or the third lens group 162 may include multiple lenses (for example, two, three, etc.), the multiple lenses may all be convex lenses or concave lenses, or partially convex lenses and partially concave lenses. In the present embodiment, the third lens group 162 includes three lenses. The lenses of the third lens group 162 may be glass lenses or plastic lenses.

As shown in FIG. 8 again, the lenses of the third lens group 162 are part of the body of revolution. For example, the lenses of the third lens group 162 are firstly formed into the revolution lens S1 by a mold. Then edges of the revolution lens S1 are cut, and a cutting ratio is determined based on factors such as the size of the internal space of the electronic device 1000, the optical parameters of the zoom lens 10, and so on, so as to form the lens S2 that is approximately cube or cuboid as shown in FIG. 8 (the surface of the cube or cuboid lens S2 through which the optical axis O' passes is recessed or protruded). In some embodiments, the lenses of the third lens group 162 are directly made by using a specially fabricated mold, that is, a cavity of the mold is a part of the body of revolution such that the lenses of the third lens group 162 are directly made. As a result, the volume of the lenses of the third lens group 162 is greatly reduced, such that the entire volume of the zoom lens 10 may be reduced, which may be beneficial to the miniaturization of the electronic device 1000.

As shown in FIGS. 4-6, in the present embodiment, the lens component 12 is disposed in the mounting space 1135 of the protrusion 1133. The second moving component 16, the first moving component 14, and the prism component 13 are sequentially disposed in the receiving space 114 along the x-direction (from an image side to an object side). The lens component 12 is fixedly disposed in the protrusion 1133, the prism component 13 is fixedly disposed on the bearing surface 1111 of the base plate 111, and the lens component 12 faces towards the prism component 13. The first slider 144 of the first moving component 14 slides into the sliding groove 1127 after the first slider 144 passes through the mounting groove 1128, and the second slider 164 of the second moving component 16 slides into the sliding groove 1127 after the second slider 164 passes through the mounting groove 1128, such that the first slider 144 and the second slider 164 are slidably disposed in the sliding groove 1127. In this way, the first moving component 14 and the second moving component 16 are slidably connected to the side plate 112. The first slider 144 is fixedly connected to the first body 143, and the second slider 164 is fixedly connected to the second body 163. When the first slider 144 and the second slider 164 are sliding in the sliding groove 1127, the first body 143 carries the second lens group 142 to move, and the second body 163 carries the third lens group 162 to move. In this way, a relative distance between the second lens group 142 and the prism 132 and a relative distance between the third lens group 162 and the prism 132 may vary, while a relative distance between the second lens group 142 and the first lens group 122 on the optical axis O and a relative distance between the third lens group 162 and the first lens group 122 on the optical axis O may also vary, so as to achieve the zoom of the zoom lens 10. As shown in FIGS. 5a and 5b, in the present embodiment, the first spacing z11 on the optical axis O between the prism 132 and the second lens group 142 when the zoom lens 10 is in the wide-angle state (the state shown in FIG. 5a) is greater than the second spacing z12 on the optical axis O between the prism 132 and the second lens group 142 when the zoom lens 10 is in the telephoto state (the state shown in FIG. 5b). Besides, the third spacing z21 on the optical axis O between the second lens group 142 and the third lens group 162 when the zoom lens 10 is in the wide-angle state is greater than the fourth spacing z22 on the optical axis O between the second lens group 142 and the third lens group 162 when the zoom lens 10 is in the telephoto state. In other words, when the zoom lens 10 is switched from the wide-angle state to the telephoto state, the second lens group 142 may move towards the prism 132 (that is, the spacing between the prism 132 and the second lens group 142 on the optical axis O may be reduced), the third lens group 162 may move towards the second lens group 142, and the spacing between the second lens group 142 and the third lens group 162 on the optical axis O may be reduced. In other embodiments, the first spacing z11 on the axis when the zoom lens 10 is in the wide-angle state is less than the first spacing z12 on the axis when the zoom lens 10 is in the telephoto state, and the second spacing z21 on the axis when the zoom lens 10 is in the wide-angle state is less than the second spacing z22 on the axis when the zoom lens 10 is in the telephoto state; or, the first spacing z11 on the optical axis O when the zoom lens 10 is in the wide-angle state is less than the second spacing z12 on the optical axis O when the zoom lens 10 is in the telephoto state, and the third spacing z21 on the optical axis O when the zoom lens 10 is in the wide-angle state is greater than the fourth spacing z22 on the optical axis O when the zoom lens 10 is in the telephoto state, and the like. When the zoom lens 10 is switched from the wide-angle state to the telephoto state, the changing trend of the spacing z1 between the prism 132 and the second lens group 142 (such as the first spacing z11 and the second spacing z12) on the optical axis O and spacing between the second lens group 142 and the third lens group 162 (such as the third spacing z21 and the fourth spacing z22) on the optical axis O may be determined according to parameters (e.g., surface parameters, aspheric coefficient parameters, etc.) of the first lens group 122, the second lens group 142, and the third lens group 162, which will not be listed one by one.

It could be understood that a changing magnitude of the focal length of the zoom lens 10 is different based on the decreasing magnitude of the first spacing and second spacing on the optical axis O. For example, the focal length of the zoom lens 10 may gradually decrease as the first spacing and second spacing on the optical axis O gradually decrease. For another example, the focal length of the zoom lens 10 may gradually increase as the first spacing and second spacing on the optical axis O gradually decrease, and so on. In the present embodiment, the focal length of the zoom lens 10 gradually increases as the first spacing and second spacing on the optical axis O gradually decrease. In this way, the focal length of the zoom lens 10 may be controlled to be gradually changed in multiples. For example, as the first spacing and second spacing on the optical axis O gradually decrease, the focal length gradually changes from 1 time an initial focal length to 10 times the initial focal length (the initial focal length is a focal length of the zoom lens 10 when the zoom lens 10 is in the wide-angle state), such that the zoom lens 10 may achieve the 10-times optical zoom.

After the lens component 12 is arranged in the protrusion 1133 of the cover plate 113, the prism component 13, the first moving component 14, and the second moving component 16 are arranged in the receiving space 114, the cover plate 113 is arranged on the side plate 112, and the resisting component 1132 of the cover plate 113 is completely filled in the mounting groove 1128. It could be understood that during the zooming of the zoom lens 10, the second slider 164 may be shaken or tilted in the z-direction since there is no conflict of the inner wall of the sliding groove 1127 when the second slider 164 passes through a position of the sliding groove 1127 corresponding to the mounting groove 1128. Therefore, the resisting component 1132 may abut against the second slider 164 after being completely filled in the mounting groove 1128. Thus, it is possible to reduce the occurrence of shaking and titling of the sliders in the z-direction.

In addition, as shown in FIG. 1, after the zoom lens 10 is arranged in the electronic device 1000, the direction of the optical axis O' of the first lens group 122 is substantially coincident and parallel to the thickness direction of the electronic device 1000. The direction of the optical axis O of the third lens group 162 is substantially perpendicular to the thickness direction of the electronic device 1000, such that the zoom lens 10 may achieve a periscope structure. A direction of the zoom lens 10 in the X-direction is less than the thickness of the electronic device 1000, and a length of the zoom lens 10 in the Y-direction is less than a width of the electronic device 1000, which may facilitate the miniaturization of the electronic device 1000.

It should be noted that the electronic device 1000 may include a driving structure, for example, the driving structure may be a magnetic driving structure disposed in the receiving space 114. The magnetic driving structure includes a magnetic coil and a magnet, the magnetic coil may be disposed between the prism component 13 and the first moving component 14, or may be disposed between the first moving component 14 and the second moving component 16, or may be disposed between the second moving component 16 and the photosensitive element 50. The magnet may be disposed on the first body 143 of the first moving component 14 and the second body 163 of the second moving component 16. In the present embodiment, there are two magnetic coils, one of the two magnetic coils is disposed between the prism component 13 and the first moving component 14, and the other of the two magnetic coils is disposed between the first moving component 14 and the second moving component 16. Corresponding, there are two magnets, one of the two magnets is disposed on the first body 143 of the first moving component 14 and the other of the two magnets is disposed on the second body 163 of the second moving component 16. When the magnetic coil disposed between the prism component 13 and the first moving component 14 is energized with currents in different directions, corresponding magnetic fields are generated, such that the first body 143 arranged with the magnet is controlled to move away from the corresponding magnetic coil (the first slider 144 moves away from the corresponding magnetic coil along the sliding groove 1127) or closer towards the corresponding magnetic coil (the first slider 144 moves closer towards the corresponding magnetic coil along the sliding groove 1127). When the magnetic coil disposed between the first moving component 14 and the second moving component 16 is energized with the currents in different directions, corresponding magnetic fields are generated, such that the second body 163 arranged with the magnet is controlled to move away from the corresponding magnetic coil (the second slider 164 moves away from the corresponding magnetic coil along the sliding groove 1127) or closer towards the corresponding magnetic coil (the second slider 164 moves closer towards the corresponding magnetic coil along the sliding groove 1127).

For another example, the driving structure may be a linear motor, a stator of a first linear motor may be fixedly mounted on the inner side surface 1121, and a mover of the linear motor extends from the stator and is connected to the first body 143. A stator of a second linear motor is also fixedly mounted on the inner side surface 1121, and a mover of the linear motor extends from the stator and is connected to the second body 163. The first body 143 may be driven to move linearly (the first slider 144 slides in the sliding groove 1127) when the mover of the first linear motor makes a linear telescopic movement, and the second body 163 may be driven to move linearly (the second slider 164 slides in the sliding groove 1127) when the mover of the second linear motor makes a linear telescopic movement. The first linear motor may be disposed on the inner side surface 1121 of the first side plate 1125 and between the lens component 12 and the prism component 13. The second linear motor may be disposed on the inner side surface 1121 of the second side plate 1126 and between the first moving component 14 and the second moving component 16. In other embodiments, the first linear motor may also be disposed between the first moving component 14 and the second moving component 16, and the second linear motor may also be disposed between the second moving component 16 and the photosensitive element 50. It should be understood that the driving structure may also be other structures, such as a hydraulic structure, a piezoelectric motor, etc., which will not be listed one by one herein.

During the imaging process, light sequentially passes through the light entrance 1134 of the protrusion 1133 of the cover plate 113, the light inlet hole 123 of the lens component 12, the first lens group 122, the light outlet hole 124, and the light inlet via 133 of the prism component 13, and then is further emitted out from the light outlet via 134 after being reflected by the reflection surface 137 of the prism 132. Subsequently, the light sequentially passes through the first light entrance 145 of the first moving component 14, the second lens group 142, the first light exit 146, the second light entrance 165 of the second moving component 16, the third lens group 162, and the second light exit 166, and finally reaches the photosensitive element 50 (the photosensitive element 50 is disposed on the inner surface 1121 of the side plate 112 and facing towards the second light exit 166) to perform imaging. The zoom lens 10 may change a relative distance between the second lens group 142 and the lens component 12 on the optical axis O and a relative distance between the third lens group 162 and the lens component 12 on the optical axis O by the relative movement of the first slider 144 and the second slider 164 in the slide channel 1127, and thus the focal length of the camera module 100 may be changed to achieve the zoom of the camera module 100.

As shown in FIG. 10, in some embodiments, the second lens group 142 may also be disposed between the first lens group 122 and the incident surface 136.

In some embodiments, the first moving component 14 may be disposed in the mounting space 1135 of the protrusion 1133. The first light entrance 145 of the first moving component 14 faces towards the light outlet hole 124 of the lens component 12, and the first light exit 146 of the first moving component 14 faces towards the light entrance via 133 of the prism component 13. The first moving element 14 may be movable relative to the lens component 12 in the mounting space 1135, at which time the structure of an inner side surface of the protrusion 1133 is the same with the structure of the inner side surface 1121 of the side plate 112. For example, a sliding groove is defined, and the sliding groove penetrates through an end surface of the protrusion 1133 facing toward the prism component 13. In this case, a mounting groove may be not defined on the inner side surface of the protrusion 1133. The specific structure of the sliding groove of the protrusion 1133 and a matching structure with the sliders may refer to a matching structure between the sliding groove 1127 and the first slider 144 and a matching structure between the sliding groove 1127 and the second slider 164, which will not be repeated here. In this way, a length of the zoom lens 10 in a certain direction may be reduced.

As shown in FIGS. 4, 5a, and 5b, in some embodiments, the first housing 141 further includes the first top surface 148 and the first bottom surface 149 opposite to the first top surface 148. The first top surface 148 faces towards the cover plate 113. The first bottom surface 149 faces towards the bearing surface 1111 of the base plate 111. The first bottom surface 149 defines the first groove 1491, the surface (that is, the bearing surface 1111) of the base plate 111 facing towards the first bottom surface 149 is arranged with the first slide rail 1112. The first moving component 14 further includes the first ball 150 disposed in the first groove 1491, and the first ball 150 abuts against the bottom of the first slide rail 1112.

In some embodiments, a shape of the first groove 1491 matches a shape of the first ball 150. For example, the first ball 150 is spherical which has a small moving resistance, and the first groove 1491 is a semi-circular groove. A diameter of the first ball 150 is substantially equal to a diameter of the first groove 1491, that is, a half of the first ball 150 is located in the first groove 1491. The combination between the first ball 150 and the first groove 1491 is relatively tight, the first ball 150 may drive the first housing 141 of the first moving component 14 to move when moving. The first slide rail 1112 is arranged on the bearing surface 1111. The first slide rail 1112 may be a groove defined on the bearing surface 1111 and extending in a direction substantially parallel to the x-direction. Or, the first slide rail 1112 may also be a bump or a protrusion arranged on the bearing surface 1111 and extending in a direction substantially parallel to the x-direction, and a surface of the bump facing towards a bottom surface of the first housing 141 defines a groove matching with the first ball 150. In the present embodiment, the first slide rail 1112 is the groove defined on the bearing surface 1111 and extending in the direction substantially parallel to the x-direction. A portion of the first ball 150 is located in the first slide rail 1112 and abuts against the bottom of the first slide rail 1112 after the first moving component 14 is arranged in the receiving space 114. A cross-sectional shape of the inner wall of the first slide rail 1112 taken by a plane substantially perpendicular to the x-direction is a first arc, a cross-sectional shape of an outer contour of the first ball 150 taken by a plane substantially perpendicular to the x-direction is a second arc, and a curvature of the first arc is the same with a curvature of the second arc. As a result, an outer wall of the first ball 150 and the inner wall of the first slide rail 1112 may combine tightly in the y-direction, and two opposite sides of the outer wall of the first ball 150 abut against two opposite sides of the inner wall of the first slide rail 1112.

The number of the first grooves 1491 is one or more. For example, the number of the first grooves 1491 is one, two, three, four, more than four, etc. In the present embodiment, the number of the first grooves 1491 is four. The number of the first balls 150 may also be one or more. In the present embodiment, the number of the first balls 150 is the same as the number of the first grooves 1491, and both are four. Four first grooves 1491 are arranged on the first bottom surface 149 at intervals.

The number of the first slide rails 1112 may be one or more. The number of the first slide rails 1112 is determined according to the positions of the four first grooves 1491. For example, when centers of the four first grooves 1491 are in a straight line substantially parallel to the x-direction, only one first slide rail 1112 is required. For another example, in some embodiments, the four first grooves 1491 are divided into two groups, each of the two groups includes two first grooves 1491, a line connecting centers of the two first grooves 1491 of each of the two groups is substantially parallel to the x-direction, and the line connecting centers of the two first grooves 1491 of one of the two groups and the line connecting centers of the two first grooves 1491 of the other of the two groups are not overlapped. In this case, two first slide rails 1112 are required, one of the two first slide rails 1112 corresponds to the two first grooves 1491 of one of the two groups, and the other of the two first slide rails 1112 corresponds to the two first grooves 1491 of the other of the two groups. In the present embodiment, the four first grooves 1491 are divided into two groups, each of the two groups includes two first grooves 1491, the line connecting centers of the two first grooves 1491 of each of the two groups is substantially parallel to the x-direction, and the four first grooves 1491 may be enclosed substantially in a rectangle. In this way, when the four first balls 150 slide in the first slide rails 1112, the four first balls 150 are restricted in the two first slide rails 1112. Besides, since two opposite sides of the outer wall of each of the four first balls 150 abut against two opposite sides of the inner wall of each of the two first slide rails 1112 in the y-direction, it is possible to reduce the occurrence of the shaking and tilting of the first moving component 14 in the y-direction, which may ensure that the imaging quality of the camera module 100 is not affected.

As shown in FIGS. 5a and 5b, in some embodiments, the first top surface 148 defines a second groove 1481, and the first moving component 14 further includes a second ball 151, and the second ball 151 is disposed in the second groove 1481 and abuts against the cover plate 113.

Specifically, a shape of the second groove 1481 matches with a shape of the second ball 151. For example, the second ball 151 is spherical which has a small moving resistance, and the second groove 1481 is a semi-circular groove. A diameter of the second ball 151 is substantially equal to a diameter of the second groove 1481, that is, a half of second ball 151 is located in the second groove 1481. The combination between the second ball 151 and the second groove 1481 is relatively tight, the second ball 151 may drive the first housing 141 of the first moving component 14 to move when moving. The number of the second grooves 1481 is one or more. For example, the number of the second grooves 1481 is one, two, three, four, more than four, etc. In the present embodiment, the number of the second grooves 1481 is four. The number of the second balls 151 may also be one or more. In the present embodiment, the number of the second balls 151 is the same as the number of the second grooves 1481, and both are four. Four second grooves 1481 are arranged on the first top surface 148 of the first housing 141 at intervals. The second ball 151 is disposed in the second groove 1481 and abuts against the cover plate 113, such that the first moving component 14 is restricted between the cover plate 113 and the base plate 111. Therefore, it is possible to reduce the occurrence of the shaking and tilting of the first moving component 14 in the z-direction, so as to ensure that the imaging quality is not affected.

As shown in FIGS. 5a and 5b, in some embodiments, a second slide rail 1136 is arranged on a surface of the cover plate 113 facing towards the first top surface 148. The second ball 151 is disposed in the second groove 1481 and abuts against a bottom of the second slide rail 1136.

In some embodiments, the second slide rail 1136 may be a groove defined on a surface of the cover plate 113 facing towards the first top surface 148 and extending in a direction substantially parallel to the x-direction. The second slide rail 1136 may also be a bump or a protrusion arranged on the surface of the cover plate 113 facing towards the first top surface 148 and extending in the direction substantially parallel to the x-direction, and a surface of the bump facing towards the first top surface 148 of the first housing 141 defines a groove matching with the second ball 151. In the present embodiment, the second slide rail 1136 is a groove defined on the surface of the cover plate 113 facing towards the first top surface 148 and extends in the direction substantially parallel to the x-direction. A portion of the second ball 151 is located in the second slide rail 1136 and abuts against the bottom of the second slide rail 1136 after the first moving component 14 is arranged in the receiving space 114. A cross-sectional shape of the inner wall of the second slide rail 1136 taken by a plane substantially perpendicular to the x-direction is a third arc, a cross-sectional shape of an outer contour of the second ball 151 taken by a plane substantially perpendicular to the x-direction is a fourth arc, and a curvature of the third arc is the same with a curvature of the fourth arc. When the second ball 151 rotates along the second slide rail 1136, opposite sides of the outer wall of the second ball 151 abut against opposite sides of the inner wall of the second slide rail 1136 in the y-direction, such that movement of the second ball 151 in the y-direction is restricted. Thus, it is possible to reduce the occurrence of the shaking and tilting of the first moving component 14 in the y-direction.

The number of the second slide rails 1136 may be one or more. The number of the second slide rails 1136 is determined according to the positions of the four second grooves 1481. For example, when centers of the four second grooves 1481 are in a straight line substantially parallel to the x-direction, only one second slide rail 1136 is required. For another example, in some embodiments, the four second grooves 1481 are divided into two groups, each of the two groups includes two second grooves 1481, a line connecting centers of the two second grooves 1481 of each of the two groups is substantially parallel to the x-direction, and the line connecting centers of the two second grooves 1481 of one of the two groups and the line connecting centers of the two second grooves 1481 of the other of the two groups are not overlapped. In this case, two second slide rails 1136 are required, one of the two second slide rails 1136 corresponds to the two second grooves 1481 of one of the two groups, and the other of the two second slide rails 1136 corresponds to the two second grooves 1481 of the other of the two groups. In the present embodiment, the four second grooves 1481 are divided into two groups, each of the two groups includes two second grooves 1481, the line connecting centers of the two second grooves 1481 of each of the two groups is substantially parallel to the x-direction, and the four second grooves 1481 may be enclosed substantially in a rectangle. In this way, when the four second balls 151 slide in the two second slide rails 1136, the four second balls 151 are restricted in the two second slide rails 1136. Besides, since two opposite sides of the each of the four outer wall of the second ball 151 abut against two opposite sides of the inner wall of each of the two second slide rails 1136 in the y-direction, it is possible to reduce the occurrence of the shaking and tilting of the first moving component 14 in the y-direction, which may ensure that the imaging quality of the camera module 100 is not affected.

As shown in FIGS. 4, 5a, and 5b, in some embodiments, the second housing 161 further includes a second top surface 168 and a second bottom surface 169 opposite to the second top surface 168. The second top surface 168 faces towards the cover plate 113. The second bottom surface 169 faces towards the bearing surface 1111 of the base plate 111. The second bottom surface 169 defines a third groove 1691, and a surface (that is, the bearing surface 1111) of the base plate 111 facing towards the second bottom surface 169 is arranged with the first slide rail 1112. The second moving component 16 further includes the third ball 170 disposed in the third groove 1691, and the third ball 170 abuts against the bottom of the first slide rail 1112.

In some embodiments, a shape of the third groove 1691 matches with a shape of the third ball 170. For example, the third ball 170 is spherical which has a small moving resistance, and the third groove 1691 is a semi-circular groove. A diameter of the third ball 170 is substantially equal to a diameter of the third groove 1691, that is, a half of the third ball 170 is located in the third groove 1691. The combination between the third ball 170 and the third groove 1691 is relatively tight, the third ball 170 may drive the second housing 161 of the second moving component 16 to move when moving. The first slide rail 1112 is arranged on the bearing surface 1111. The first slide rail 1112 may be a groove formed on the bearing surface 1111 and extending in a direction substantially parallel to the x-direction. Or, the first slide rail 1112 may also be a bump or a protrusion arranged on the bearing surface 1111 and extending in a direction substantially parallel to the x-direction, and a surface of the bump facing towards a bottom surface of the second housing 161 defines a groove matching with the third ball 170. In the present embodiment, the first slide rail 1112 is the groove disposed on the bearing surface 1111 and extending in the direction substantially parallel to the x-direction. A portion of the third ball 170 is located in the first slide rail 1112 and abuts against the bottom of the first slide rail 1112 after the second moving component 16 is arranged in the receiving space 114. The cross-sectional shape of the inner wall of the first slide rail 1112 taken by the plane substantially perpendicular to the x-direction is the first arc, a cross-sectional shape of an outer contour of the third ball 170 taken by a plane substantially perpendicular to the x-direction is the second arc, and the curvature of the first arc is the same with the curvature of the second arc. As a result, an outer wall of the third ball 170 and the inner wall of the first slide rail 1112 may combine tightly in the y-direction, and two opposite sides of the outer wall of the third ball 170 abut against the two opposite sides of the inner wall of the first slide rail 1112.

The number of the third grooves 1691 is one or more. For example, the number of the third grooves 1691 is one, two, three, four more than four, etc. In the present embodiment, the number of the third grooves 1691 is four. The number of the third balls 170 may also be one or more. In the present embodiment, the number of the third balls 170 is the same as the number of the third grooves 1691, and both are four. Four third grooves 1691 are arranged on the second bottom surface 169 at intervals.

In the present embodiment, the four third grooves 1691 are divided into two groups, each of the two groups includes two third grooves 1691. A line connecting centers of the two third grooves 1691 of one of the two groups is parallel to a line connecting centers of the two third grooves 1691 of the other of the two groups, and both the center lines are substantially parallel to the x-direction. The four third grooves 1691 may be enclosed in a rectangle. In this way, when the four third balls 170 slide in the two first slide rails 1112, the four third balls 170 are restricted in the two first slide rails 1112. Besides, since two opposite sides of the outer wall of each of the four third balls 170 abut against two opposite sides of the inner wall of each of the two first slide rails 1112 in the y-direction, it is possible to reduce the occurrence of the shaking and tilting of the second moving component 16 in the y-direction, which may ensure that the imaging quality of the camera module 100 is not affected.

As shown in FIGS. 5a and 5b, in some embodiments, the second top surface 168 defines a fourth groove 1681, and the second moving component 16 further includes a fourth ball 171, and the fourth ball 171 is disposed in the fourth groove 1681 and abuts against the cover plate 113.

Specifically, a shape of the fourth groove 1681 matches with a shape of the fourth ball 171. For example, the fourth ball 171 is spherical which has a small moving resistance, and the fourth groove 1681 is a semi-circular groove. A diameter of the fourth ball 171 is substantially equal to a diameter of the fourth groove 1681, that is, a half of the fourth ball 171 is located in the fourth groove 1681. The combination between the fourth ball 171 and the fourth groove 1681 is relatively tight, the fourth ball 171 may drive the second housing 161 of the second moving component 16 to move when moving. The number of the fourth grooves 1681 is one or more. For example, the number of the fourth grooves 1681 is one, two, three, four, more than four, etc. In the present embodiment, the number of the fourth grooves 1681 is four. The number of the fourth balls 171 may also be one or more. In the present embodiment, the number of the fourth balls 171 is the same as the number of the fourth grooves 1681, and both are four. Four fourth grooves 1681 are arranged on the second top surface 168 of the second housing 161 at intervals. The fourth ball 171 is disposed in the fourth groove 1681 and abuts against the cover plate 113, such that the second moving component 16 is restricted between the cover plate 113 and the base plate 111. Therefore, it is possible to reduce the occurrence of the shaking and tilting of the second moving component 16 in the z-direction, so as to ensure that the imaging quality is not affected.

As shown in FIGS. 5a and 5b, in some embodiments, a second slide rail 1136 is defined on a surface of the cover plate 113 facing towards the second top surface 168. The fourth ball 171 is disposed in the fourth groove 1681 and abuts against the bottom of the second slide rail 1136.

In some embodiments, the second slide rail 1136 may be a groove defined on a surface of the cover plate 113 facing towards the second top surface 168 and extending in the direction substantially parallel to the x-direction. The second slide rail 1136 may also be a bump or a protrusion arranged on the surface of the cover plate 113 facing towards the second top surface 168 and extending in the direction substantially parallel to the x-direction, and a surface of the bump facing towards the second top surface 168 of the second housing 161 defines a groove matching with the fourth ball 171. In the present embodiment, the second slide rail 1136 is a groove defined on the surface of the cover plate 113 facing towards the second top surface 168 and extending in the direction substantially parallel to the x-direction. A portion of the fourth ball 171 is located in the second slide rail 1136 and abuts against the bottom of the second slide rail 1136 after the second moving component 16 is arranged in the receiving space 114. The cross-sectional shape of the inner wall of the second slide rail 1136 taken by the plane substantially perpendicular to the x-direction is the third arc, a cross-sectional shape of an outer contour of the fourth ball 171 taken by a plane substantially perpendicular to the x-direction is the fourth arc, and the curvature of the third arc is the same with the curvature of the fourth arc. When the fourth ball 171 rotates along the second slide rail 1136, opposite sides of the outer wall of the fourth ball 171 abut against the opposite sides of the inner wall of the second slide rail 1136 in the y-direction, such that movement of the fourth ball 171 in the y-direction is restricted. Thus, it is possible to reduce the occurrence of the shaking and tilting of the second moving component 16 in the y-direction.

In the present embodiment, the four fourth grooves 1681 are divided into two groups, each of the two groups includes two fourth grooves 1681. A line connecting centers of the two third grooves 1691 of one of the two groups is substantially parallel to a line connecting centers of the two third grooves 1691 of the other of the two groups, and both the lines are substantially parallel to the x-direction. The four fourth grooves 1681 may be enclosed in a rectangle. In this way, when the four fourth balls 171 slide in the two second slide rails 1136, the four fourth balls 171 are restricted in the two second slide rails 1136. Besides, since the two opposite sides of the outer wall of each of the four fourth balls 171 abut against the two opposite sides of the inner wall of each of the two second slide rails 1136 in the y-direction, it is possible to reduce the occurrence of the shaking and tilting of the second moving component 16 in the y-direction, which may further ensure that the imaging quality of the camera module 100 is not affected.

In the description of the present specification, the description with reference to the terms "certain embodiments", "one embodiment", "some embodiments", "illustrative embodiment", "example", "specific example", or "some examples", and the like, means that a specific feature, structure, material, or characteristic described in connection with the embodiment or example is included in at least one embodiment or example of the present disclosure. Thus, the illustrative descriptions of the terms throughout this specification are not necessarily as shown in the same embodiment or example of the present disclosure. Furthermore, the specific features, structures, materials, or characteristics may be combined in any suitable manner in one or more embodiments or examples.

In addition, terms such as "first", "second", and the like, are used herein for purposes of description, and are not intended to indicate or imply relative importance or significance or to imply the number of indicated technical features. Thus, the feature defined with "first", "second", and the like may explicitly or implicitly include one or more of such a feature. In the description of the present disclosure, it should be noted that, "a plurality of" means at least two, for example, two, three, unless specified otherwise.

Although explanatory embodiments of the present disclosure have been shown and described, it would be appreciated by those skilled in the art that the above embodiments are illustrative, and cannot be construed to limit the present disclosure. Changes, modifications, alternatives, and transformation can be made to the embodiments by those skilled in the art without departing from scope of the present disclosure. The scope of the present disclosure is defined by the claims.

## Claims

1. A zoom lens (10), comprising:
a first lens group (122), having a negative optical power;
a prism (132), comprising an incident surface (136), a reflection surface (137), and an exit surface (138) sequentially connected to each other, the first lens group (122) facing towards the incident surface (136);
a second lens group (142), having a positive optical power and being movable with respect to the prism (132);
a third lens group (162), having a negative optical power, the third lens group (162) facing towards the exit surface (138) and being movable with respect to the prism (132);
a housing (11), **characterized in that** the housing (11) comprises a base plate (111) and a side plate (112) disposed on the base plate (111);
a first moving component (14), wherein the first moving component (14) comprises the second lens group (142) and a first housing (141), the second lens group (142) is arranged on the first housing (141); and
a second moving component (16), wherein the second moving component (16) comprises the third lens group (162) and a second housing (161), and the third lens group (162) is arranged on the second housing (161); and
wherein the first housing (141) comprises a first body (143) and a first slider (144) connected to the first body (143), the second housing (161) comprises a second body (163) and a second slider (164) connected to the second body (163);
the side plate (112) defines a sliding groove (1127); the sliding groove (1127) extends along a direction of an optical axis (O) of the second lens group (142) and the optical axis of the third lens group (162), the first slider (144) and the second slider (164) are slidably arranged in the sliding groove (1127), the first housing (141) carries the second lens group (142) to slide when the first housing (141) is sliding, and the second housing (161) carries the third lens group (162) to slide when the second housing (161) is sliding.

2. The zoom lens (10) as claimed in claim 1, wherein the second lens group (142) is located between the third lens group (162) and the exit surface (138).

3. The zoom lens (10) as claimed in any one of claims 1-2, wherein each of the first lens group (122), the second lens group (142), and the third lens group (162) comprises one or more lenses, and at least one of the lenses is a part of a body of revolution.

4. The zoom lens (10) as claimed in claim 2, wherein the third lens group (162) has an optical axis (O), a first spacing (z11) on the optical axis between the prism (132) and the second lens group (142) when the zoom lens (10) is in a wide-angle state is greater than a second spacing (z12) on the optical axis between the prism (132) and the second lens group (142) when the zoom lens (10) is in a telephoto state, and a third spacing (z21) on the optical axis between the second lens group (142) and the third lens group (162) when the zoom lens (10) is in the wide-angle state is greater than a fourth spacing (z22) on the optical axis between the second lens group (142) and the third lens group (162) when the zoom lens (10) is in the telephoto state.

5. The zoom lens (10) according to any one of claims 1-4, wherein each of the first lens group (122), the second lens group (142), and the third lens group (162) comprises one or more lenses, and the lenses are plastic lenses or glass lenses.

6. The zoom lens (10) as claimed in claim 2, wherein the housing (11) further comprises a cover plate (113) disposed on the side plate (112); wherein the first housing (141) further comprises:
a first top surface (148), facing towards the cover plate (113); and
a first bottom surface (149), opposite to the first top surface (148), facing towards the base plate (111), and defining a first groove (1491), wherein a first slide rail (1112) is arranged on a surface of the base plate (111) facing towards the first bottom surface (149), the first moving component (14) further comprises a first ball (150) disposed in the first groove (1491), and the first ball (150) abuts against a bottom of the first slide rail (1112).

7. The zoom lens (10) as claim in claim 6, wherein the first lens group (122) has an optical axis, and the cover plate (113) comprises:
a cover body (1131), arranged on the side plate (112); and
a resisting component (1132), disposed on both sides of the cover body (1131);
wherein when the cover plate (113) is mounted on the side plate (112), the resisting component (1132) is located in the mounting groove (1128), a length (L) of the resisting component (1132) in the optical axis of the first lens group (122) is substantially equal to a depth (H) of the mounting groove (1128) in the optical axis of the first lens group (122).

8. The zoom lens (10) as claimed in claim 2, wherein the side plate (112) defines a mounting groove (1128), one end of the mounting groove (1128) extends through a surface of the side plate (112) facing away from the base plate (111), another end of the mounting groove (1128) is fluidly coupled to the sliding groove (1127), and the first slider (144) and the second slider (164) are arranged in the sliding groove (1127) through the mounting groove (1128).

9. The zoom lens (10) as claimed in claim 8, wherein the first top surface (148) defines a second groove (1481), the first moving component (14) further comprises a second ball (151) disposed in the second groove (1481), the second ball (151) abuts against a bottom of the second slide rail (1136), a second slide rail (1136) is arranged on a surface of the cover plate (113) facing towards the first top surface (148) and extends in a direction substantially parallel to the optical axis of the third lens group (162);
wherein a cross-sectional shape of an inner wall of the first slide rail (1112) taken by a plane substantially perpendicular to the direction substantially parallel to the optical axis of the third lens group (162) is a first arc, a cross-sectional shape of an outer contour of the first ball (150) taken by a plane substantially perpendicular to the direction substantially parallel to the optical axis of the third lens group (162) is a second arc, and a curvature of the first arc is the same with a curvature of the second arc; and
wherein a cross-sectional shape of an inner wall of the second slide rail (1136) taken by a plane substantially perpendicular to the direction substantially parallel to the optical axis of the third lens group (162) is a third arc, a cross-sectional shape of an outer contour of the second ball (151) taken by a plane substantially perpendicular to the direction substantially parallel to the optical axis of the third lens group (162) is a fourth arc, and a curvature of the third arc is the same with a curvature of the fourth arc.

10. The zoom lens (10) as claimed in any one of claims 1-9, wherein the incident surface (136) is substantially perpendicular to the exit surface (138), a focal length of the zoom lens (10) changes from 1 time an initial focal length to 10 times the initial focal length, and the initial focal length is a focal length when the zoom lens (10) is in a wide-angle state.

11. A camera module (100), **characterized by** comprising:
a zoom lens (10) according to any one of claims 1-10; and
a photosensitive element (50), arranged on an image side of the zoom lens (10).

12. An electronic device (1000), **characterized by** comprising:
a casing (200); and
a camera module (100) according to any one of claim 11, arranged in the casing (200).

13. The electronic device (1000) as claimed in claim 12, wherein an optical axis direction of the first lens group (122) substantially coincides with a thickness direction of the electronic device (1000), and an optical axis direction of the third lens group (162) is substantially perpendicular to the thickness direction of the electronic device (1000).

## Patentansprüche

1. Zoomlinse (10), die Folgendes umfasst:
eine erste Linsengruppe (122) mit einem negativen Brechwert;
ein Prisma (132), das eine Einfallsfläche (136), eine Reflexionsfläche (137) und eine Austrittsfläche (138) umfasst, die nacheinander miteinander verbunden sind, wobei die erste Linsengruppe (122) der Einfallsfläche (136) zugewandt ist;
eine zweite Linsengruppe (142) mit einem positiven Brechwert und die in Bezug auf das Prisma (132) beweglich ist;
eine dritte Linsengruppe (162) mit einem negativen Brechwert, wobei die dritte Linsengruppe (162) der Austrittsfläche (138) zugewandt ist und in Bezug auf das Prisma (132) beweglich ist;
ein Gehäuse (11), **dadurch gekennzeichnet, dass**
das Gehäuse (11) eine Basisplatte (111) und eine Seitenplatte (112), die auf der Basisplatte (111) angeordnet ist, umfasst;
eine erste sich bewegende Komponente (14), wobei die erste sich bewegende Komponente (14) die zweite Linsengruppe (142) und ein erstes Gehäuse (141) umfasst, wobei die zweite Linsengruppe (142) auf dem ersten Gehäuse (141) angeordnet ist; und
eine zweite sich bewegende Komponente (16), wobei die zweite sich bewegende Komponente (16) die dritte Linsengruppe (162) und ein zweites Gehäuse (161) umfasst, und die dritte Linsengruppe (162) auf dem zweiten Gehäuse (161) angeordnet ist; und
wobei das erste Gehäuse (141) einen ersten Körper (143) und einen ersten Gleiter (144), der mit dem ersten Körper (143) verbunden ist, umfasst, wobei das zweite Gehäuse (161) einen zweiten Körper (163) und einen zweiten Gleiter (164), der mit dem zweiten Körper (163) verbunden ist, umfasst;
wobei die Seitenplatte (112) eine Gleitrille (1127) definiert; die Gleitrille (1127) sich entlang einer Richtung einer optischen Achse (O) der zweiten Linsengruppe (142) und der optischen Achse der dritten Linsengruppe (162) erstreckt, der erste Gleiter (144) und der zweite Gleiter (164) gleitfähig in der Gleitrille (1127) angeordnet sind, das erste Gehäuse (141) die zweite Linsengruppe (142) trägt, um zu gleiten, wenn das erste Gehäuse (141) gleitet, und das zweite Gehäuse (161) die dritte Linsengruppe (162) trägt, um zu gleiten, wenn das zweite Gehäuse (161) gleitet.

2. Zoomlinse (10) nach Anspruch 1, wobei sich die zweite Linsengruppe (142) zwischen der dritten Linsengruppe (162) und der Austrittsfläche (138) befindet.

3. Zoomlinse (10) nach einem der Ansprüche 1-2, wobei jede der ersten Linsengruppe (122), der zweiten Linsengruppe (142) und der dritten Linsengruppe (162) eine oder mehrere Linsen umfasst und mindestens eine der Linsen Teil eines Rotationskörpers ist.

4. Zoomlinse (10) nach Anspruch 2, wobei die dritte Linsengruppe (162) eine optische Achse (O) besitzt, wobei ein erster Abstand (z11) auf der optischen Achse zwischen dem Prisma (132) und der zweiten Linsengruppe (142) dann, wenn die Zoomlinse (10) in einem Weitwinkelzustand ist, größer als ein zweiter Abstand (z12) auf der optischen Achse zwischen dem Prisma (132) und der zweiten Linsengruppe (142) ist, wenn die Zoomlinse (10) in einem Teleobjektivzustand ist, und ein dritter Abstand (z21) auf der optischen Achse zwischen der zweiten Linsengruppe (142) und der dritten Linsengruppe (162) dann, wenn die Zoomlinse (10) in dem Weitwinkelzustand ist, größer als ein vierter Abstand (z22) auf der optischen Achse zwischen der zweiten Linsengruppe (142) und der dritten Linsengruppe (162) ist, wenn die Zoomlinse (10) in dem Teleobjektivzustand ist.

5. Zoomlinse (10) nach einem der Ansprüche 1-4, wobei jede der ersten Linsengruppe (122), der zweiten Linsengruppe (142) und der dritten Linsengruppe (162) eine oder mehrere Linsen umfasst und die Linsen Kunststofflinsen oder Glaslinsen sind.

6. Zoomlinse (10) nach Anspruch 2, wobei das Gehäuse (11) ferner eine Abdeckplatte (113) umfasst, die auf der Seitenplatte (112) angeordnet ist; wobei das erste Gehäuse (141) ferner Folgendes umfasst:
eine erste obere Fläche (148), die der Abdeckplatte (113) zugewandt ist; und
eine erste untere Fläche (149) gegenüber der ersten oberen Fläche (148), die der Basisplatte (111) zugewandt ist, und eine erste Rille (1491) definiert, wobei eine erste Gleitschiene (1112) auf einer Fläche der Basisplatte (111) angeordnet ist, die der ersten unteren Fläche (149) zugewandt ist, wobei die erste sich bewegende Komponente (14) ferner eine erste Kugel (150) umfasst, die in der ersten Rille (1491) angeordnet ist und die erste Kugel (150) gegen einen Boden der ersten Gleitschiene (1112) stößt.

7. Zoomlinse (10) nach Anspruch 6, wobei die erste Linsengruppe (122) eine optische Achse besitzt und die Abdeckplatte (113) Folgendes umfasst:
einen Abdeckkörper (1131), der auf der Seitenplatte (112) angeordnet ist; und
eine Widerstandskomponente (1132), die auf beiden Seiten des Abdeckkörpers (1131) angeordnet ist;
wobei dann, wenn die Abdeckplatte (113) auf der Seitenplatte (112) befestigt ist, die Widerstandskomponente (1132) sich in der Befestigungsrille (1128) befindet, wobei eine Länge (L) der Widerstandskomponente (1132) in der optischen Achse der ersten Linsengruppe (122) im Wesentlichen gleich einer Tiefe (H) der Befestigungsrille (1128) in der optischen Achse der ersten Linsengruppe (122) ist.

8. Zoomlinse (10) nach Anspruch 2, wobei die Seitenplatte (112) eine Befestigungsrille (1128) definiert, wobei sich ein Ende der Befestigungsrille (1128) durch eine Fläche der Seitenplatte (112), die von der Basisplatte (111) abgewandt ist, erstreckt, ein anderes Ende der Befestigungsrille (1128) fluidtechnisch an die Gleitrille (1127) gekoppelt ist und der erste Gleiter (144) und der zweite Gleiter (164) in der Gleitrille (1127) durch die Befestigungsrille (1128) angeordnet sind.

9. Zoomlinse (10) nach Anspruch 8, wobei die erste obere Fläche (148) eine zweite Rille (1481) definiert, wobei die erste sich bewegende Komponente (14) ferner eine zweite Kugel (151) umfasst, die in der zweiten Rille (1481) angeordnet ist, wobei die zweite Kugel (151) gegen einen Boden der zweiten Gleitschiene (1136) stößt, eine zweite Gleitschiene (1136) auf einer Fläche der Abdeckplatte (113) angeordnet ist, die der ersten oberen Fläche (148) zugewandt ist und sich in einer Richtung im Wesentlichen parallel zu der optischen Achse der dritten Linsengruppe (162) erstreckt;
wobei eine Querschnittsform einer inneren Wand der ersten Gleitschiene (1112) in einer Ebene im Wesentlichen senkrecht zu der Richtung im Wesentlichen parallel zu der optischen Achse der dritten Linsengruppe (162) genommen ein erster Bogen ist, eine Querschnittsform eines äußeren Umrisses der ersten Kugel (150) in einer Ebene im Wesentlichen senkrecht zu der Richtung im Wesentlichen parallel zu der optischen Achse der dritten Linsengruppe (162) genommen ein zweiter Bogen ist und eine Krümmung des ersten Bogens dieselbe wie eine Krümmung des zweiten Bogens ist; und
wobei eine Querschnittsform einer inneren Wand der zweiten Gleitschiene (1136) in einer Ebene im Wesentlichen senkrecht zu der Richtung im Wesentlichen parallel zu der optischen Achse der dritten Linsengruppe (162) genommen ein dritter Bogen ist, wobei eine Querschnittsform eines äußeren Umrisses der zweiten Kugel (151) in einer Ebene im Wesentlichen senkrecht zu der Richtung im Wesentlichen parallel zu der optischen Achse der dritten Linsengruppe (162) genommen ein vierter Bogen ist und eine Krümmung des dritten Bogens dieselbe wie eine Krümmung des vierten Bogens ist.

10. Zoomlinse (10) nach einem der Ansprüche 1-9, wobei die Einfallsfläche (136) im Wesentlichen senkrecht zu der Austrittsfläche (138) ist, wobei eine Brennweite der Zoomlinse (10) von einmal einer Anfangsbrennweite zu 10-mal der Anfangsbrennweite wechselt und die Anfangsbrennweite eine Brennweite ist, wenn die Zoomlinse (10) in einem Weitwinkelzustand ist.

11. Kameramodul (100), **gekennzeichnet durch**:
eine Zoomlinse (10) nach einem der Ansprüche 1-10; und
ein fotoempfindliches Element (50), das auf einer Bildseite der Zoomlinse (10) angeordnet ist.

12. Elektronische Vorrichtung (1000), **gekennzeichnet durch**:
ein Gehäuse (200); und
ein Kameramodul (100) nach Anspruch 11, das in dem Gehäuse (200) angeordnet ist.

13. Elektronische Vorrichtung (1000) nach Anspruch 12, wobei eine Richtung einer optischen Achse der ersten Linsengruppe (122) im Wesentlichen mit einer Richtung der Dicke der elektronischen Vorrichtung (1000) zusammenfällt und eine Richtung einer optischen Achse der dritten Linsengruppe (162) im Wesentlichen senkrecht zu der Richtung der Dicke der elektronischen Vorrichtung (1000) ist.

## Revendications

1. Objectif à focale variable (10), comprenant :
un premier groupe de lentilles (122), possédant une puissance optique négative ;
un prisme (132), comprenant une surface d'incidence (136), une surface de réflexion (137), et une surface de sortie (138) successivement liées entre elles, le premier groupe de lentilles (122) étant tourné vers la surface d'incidence (136) ;
un deuxième groupe de lentilles (142), possédant une puissance optique positive et mobile par rapport au prisme (132) ;
un troisième groupe de lentilles (162), possédant une puissance optique négative, le troisième groupe de lentilles (162) étant tourné vers la surface de sortie (138) et mobile par rapport au prisme (132) ;
un boîtier (11), **caractérisé en ce que**
le boîtier (11) comprend une plaque de base (111) et une plaque latérale (112) agencée sur la plaque de base (111) ;
un premier composant mobile (14), le premier composant mobile (14) comprenant le deuxième groupe de lentilles (142) et un premier boîtier (141), le deuxième groupe de lentilles (142) étant agencé sur le premier boîtier (141) ; et
un deuxième composant mobile (16), le deuxième composant mobile (16) comprenant le troisième groupe de lentilles (162) et un deuxième boîtier (161), et le troisième groupe de lentilles (162) étant agencé sur le deuxième boîtier (161) ; et
dans lequel le premier boîtier (141) comprend un premier corps (143) et un premier coulisseau (144) lié au premier corps (143), le deuxième boîtier (161) comprend un deuxième corps (163) et un deuxième coulisseau (164) lié au deuxième corps (163) ;
la plaque latérale (112) définit une rainure de coulissement (1127) ; la rainure de coulissement (1127) s'étend suivant une direction d'un axe optique (O) du deuxième groupe de lentilles (142) et l'axe optique du troisième groupe de lentilles (162), le premier coulisseau (144) et le deuxième coulisseau (164) sont agencés coulissants dans la rainure de coulissement (1127), le premier boîtier (141) porte le deuxième groupe de lentilles (142) pour coulisser lorsque le premier boîtier (141) coulisse, et le deuxième boîtier (161) porte le troisième groupe de lentilles (162) pour coulisser lorsque le deuxième boîtier (161) coulisse.

2. Objectif à focale variable (10) selon la revendication 1, dans lequel le deuxième groupe de lentilles (142) se situe entre le troisième groupe de lentilles (162) et la surface de sortie (138).

3. Objectif à focale variable (10) selon l'une quelconque des revendications 1 à 2, dans lequel le premier groupe de lentilles (122), le deuxième groupe de lentilles (142), et le troisième groupe de lentilles (162) comprennent chacun une ou plusieurs lentilles, et au moins une des lentilles fait partie d'un corps de révolution.

4. Objectif à focale variable (10) selon la revendication 2, dans lequel le troisième groupe de lentilles (162) possède un axe optique (O), un premier espacement (z11) sur l'axe optique entre le prisme (132) et le deuxième groupe de lentilles (142) lorsque l'objectif à focale variable (10) est en mode grand angle est supérieur à un deuxième espacement (z12) sur l'axe optique entre le prisme (132) et le deuxième groupe de lentilles (142) lorsque l'objectif à focale variable (10) est en mode téléobjectif, et un troisième espacement (z21) sur l'axe optique entre le deuxième groupe de lentilles (142) et le troisième groupe de lentilles (162) lorsque l'objectif à focale variable (10) est en mode grand angle est supérieur à un quatrième espacement (z22) sur l'axe optique entre le deuxième groupe de lentilles (142) et le troisième groupe de lentilles (162) lorsque l'objectif à focale variable (10) est en mode téléobjectif.

5. Objectif à focale variable (10) selon l'une quelconque des revendications 1 à 4, dans lequel le premier groupe de lentilles (122), le deuxième groupe de lentilles (142), et le troisième groupe de lentilles (162) comprennent chacun une ou plusieurs lentilles, et les lentilles sont des lentilles en plastique ou des lentilles en verre.

6. Objectif à focale variable (10) selon la revendication 2, dans lequel le boîtier (11) comprend en outre une plaque de recouvrement (113) agencée sur la plaque latérale (112) ; le premier boîtier (141) comprenant en outre :
une première surface supérieure (148), tournée vers la plaque de recouvrement (113) ; et
une première surface inférieure (149), à l'opposé de la première surface supérieure (148), tournée vers la plaque de base (111), et définissant une première rainure (1491), une première glissière (1112) étant agencée sur une surface de la plaque de base (111) tournée vers la première surface inférieure (149), le premier composant mobile (14) comprenant en outre une première bille (150) agencée dans la première rainure (1491), et la première bille (150) venant en butée contre le fond de la première glissière (1112).

7. Objectif à focale variable (10) selon la revendication 6, dans lequel le premier groupe de lentilles (122) possède un axe optique, et la plaque de recouvrement (113) comprend :
un corps de recouvrement (1131), agencé sur la plaque latérale (112) ; et
un composant résistant (1132), agencé des deux côtés du corps de recouvrement (1131) ;
dans lequel, lorsque la plaque de recouvrement (113) est montée sur la plaque latérale (112), le composant résistant (1132) se situe dans la rainure de montage (1128), une longueur (L) du composant résistant (1132) dans l'axe optique du premier groupe de lentilles (122) est sensiblement égale à une profondeur (H) de la rainure de montage (1128) dans l'axe optique du premier groupe de lentilles (122).

8. Objectif à focale variable (10) selon la revendication 2, dans lequel la plaque latérale (112) définit une rainure de montage (1128), une extrémité de la rainure de montage (1128) s'étend à travers une surface de la plaque latérale (112) tournée à l'opposé de la plaque de base (111), une autre extrémité de la rainure de montage (1128) est couplée fluidiquement à la rainure de coulissement (1127), et le premier coulisseau (144) et le deuxième coulisseau (164) sont agencés dans la rainure de coulissement (1127) à travers la rainure de montage (1128).

9. Objectif à focale variable (10) selon la revendication 8, dans lequel la première surface supérieure (148) définit une deuxième rainure (1481), le premier composant mobile (14) comprend en outre une deuxième bille (151) agencée dans la deuxième rainure (1481), la deuxième bille (151) vient en butée contre le fond de la deuxième glissière (1136), une deuxième glissière (1136) est agencée sur une surface de la plaque de recouvrement (113) tournée vers la première surface supérieure (148) et s'étend dans une direction sensiblement parallèle à l'axe optique du troisième groupe de lentilles (162) ;
dans lequel une forme d'une paroi intérieure de la première glissière (1112), en coupe transversale par un plan sensiblement perpendiculaire à la direction sensiblement parallèle à l'axe optique du troisième groupe de lentilles (162), constitue un premier arc, une forme d'un contour extérieur de la première bille (150), en coupe transversale par un plan sensiblement perpendiculaire à la direction sensiblement parallèle à l'axe optique du troisième groupe de lentilles (162), constitue un deuxième arc, et la courbure du premier arc est identique à la courbure du deuxième arc ; et
dans lequel une forme d'une paroi intérieure de la deuxième glissière (1136), en coupe transversale par un plan sensiblement perpendiculaire à la direction sensiblement parallèle à l'axe optique du troisième groupe de lentilles (162), constitue un troisième arc, une forme d'un contour extérieur de la deuxième bille (151), en coupe transversale par un plan sensiblement perpendiculaire à la direction sensiblement parallèle à l'axe optique du troisième groupe de lentilles (162), constitue un quatrième arc, et la courbure du troisième arc est identique à la courbure du quatrième arc.

10. Objectif à focale variable (10) selon l'une quelconque des revendications 1 à 9, dans lequel la surface d'incidence (136) est sensiblement perpendiculaire à la surface de sortie (138), une distance focale de l'objectif à focale variable (10) varie de 1 fois une distance focale initiale à 10 fois la distance focale initiale, et la distance focale initiale est une distance focale lorsque l'objectif à focale variable (10) est en mode grand angle.

11. Module caméra (100), **caractérisé en ce qu'**il comprend :
un objectif à focale variable (10) selon l'une quelconque des revendications 1 à 10 ; et
un élément photosensible (50), agencé d'un côté image de l'objectif à focale variable (10).

12. Dispositif électronique (1000), **caractérisé en ce qu'**il comprend :
une coque (200) ; et
un module caméra (100) selon la revendication 11, agencé dans la coque (200).

13. Dispositif électronique (1000) selon la revendication 12, dans lequel une direction d'axe optique du premier groupe de lentilles (122) coïncide sensiblement avec une direction en épaisseur du dispositif électronique (1000), et une direction d'axe optique du troisième groupe de lentilles (162) est sensiblement perpendiculaire à la direction en épaisseur du dispositif électronique (1000).
